# FASCICULE DE BREVET EUROPEEN

(11) **EP 2 084 644 B1**
(45) Date de publication et mention de la délivrance du brevet: **05.12.2012**
(21) Numéro de dépôt: 07866439.8
(22) Date de dépôt: 25.10.2007
(51) Int. Cl.: G06F 17/30, G06F 21/22, G06F 9/44

(54) **OUTIL INFORMATIQUE DE GESTION DE DOCUMENTS NUMERIQUES**
COMPUTERWERKZEUG ZUR VERWALTUNG DIGITALER DOKUMENTE
COMPUTER TOOL FOR MANAGING DIGITAL DOCUMENTS

(30) Priorité: 27.10.2006 FR 0609464
(43) Date de publication de la demande: 05.08.2009
(73) Titulaire: INRIA - Institut National de Recherche en Informatique et en Automatique, 78153 Le Chesnay Cedex (FR)
(72) Inventeur: ROUSSEAU, Guillaume, 75015 Paris (FR); BIAIS, Maxime, 75015 Paris (FR)
(74) Mandataire: Jacobson, Claude
(86) Numéro de dépôt international: PCT/FR2007/001766
(87) Numéro de publication internationale: WO 2008/059124

(56) Documents cités:
- US-A1- 2006 041 597
- US-B1- 6 282 698
- US-B1- 6 658 423
- HUI YANG, JAMIE CALLAN: "Near-Duplicate Detection by instance-Level Constrained Clustering" SIGIR'06, 6 août 2006 (2006-08-06), - 11 août 2006 (2006-08-11) XP002443932 Seattle, Washington, USA

## Description

L'invention concerne le traitement de documents informatiques.

Un document informatique est à la base un fichier de type quelconque, dont le contenu peut être rendu accessible à l'homme, directementou indirectement. L'accessibilité peut être assez directe s'il s'agit de fichiers de type textuel. Elle est moins directe s'il s'agit de musique ou de vidéo. D'autres exemples seront considérés plus loin.

Les systèmes de fichiers sont, depuis déjà longtemps, organisés de manière à permettre une datation précise, et en principe exacte, de chaque fichier. De même, on sait, de différentes manières, associer à un fichier informatique différents attributs. À la base, ces attributs sont liés à la nature informatique du fichier lui-même, par exemple les attributs "lecture seule", "archivable", "système", ou encore "caché". À côté des attributs liés au système de fichier, d'autres attributs peuvent être associés à un fichier, par exemple dans un en-tête de celui-ci. L'informatique permet également de comparer des documents. Une comparaison "minimale" peut se faire en utilisant seulement les attributs du système de fichier. Elle s'applique à tout type de fichier, mais est très imparfaite : elle considérera par exemple comme différents des fichiers identiques, mais possédant une date système différente. Les comparaisons plus évoluées s'intéressent au contenu des fichiers. Les modalités de la comparaison différent alors suivant qu'il s'agit par exemple d'un fichier de type "texte", ou bien, à l'opposé, d'un fichier binaire, avec, entre les deux, des fichiers de nature plus évoluée, comme les fichiers image, dont la comparaison est plus délicate.

Le Demandeur a observé qu'il n'existe pas, actuellement, de technique permettant de manière méthodique et automatique, d'effectuer des comparaisons, en même temps qu'une datation précise des éléments de cette comparaison. Le besoin d'une technique de ce genre se fait sentir dans différents secteurs, comme celui de la détermination du statut juridique d'oeuvres au sens du Droit d'Auteur, et plus particulièrement d'oeuvres de type logiciel.

Par ailleurs, le document US 6 658 423 B1 décrit une technique de détection de documents dupliqués ou quasi-dupliqués.

La présente invention vient améliorer la situation.

L'invention a pour objet un dispositif informatique de gestion de documents, tel que défini dans la revendication 1.

Des modes de réalisation du dispositif selon l'invention sont décrits dans les revendications dépendantes 2 à 25.

D'autres caractéristiques et avantages de l'invention apparaîtront à la lecture de la description détaillée ci-après et des dessins sur lesquels :
- la figure 1 représente un schéma fonctionnel illustrant un exemple d'outil selon l'invention,
- la figure 2 représente un ordinogramme illustrant une fonction de génération de signature de document pour l'outil de l'invention,
- la figure 3 représente un tableau illustrant un stockage dans la base de travail de la figure 1,
- la figure 4 représente un ordinogramme illustrant une fonction de génération de signature d'état pour l'outil de l'invention,
- la figure 5 est un ordinogramme illustrant une fonction de génération d'empreinte de jeu de documents pour l'outil de l'invention,
- la figure 6 représente un tableau illustrant une autre partie du stockage de la base de travail de la figure 1,
- la figure 7 représente un ordinogramme illustrant une fonction de génération de signature de document pour l'outil de l'invention dans un mode de réalisation particulier,
- la figure 8 représente un ordinogramme illustrant une fonction de datation d'empreinte dans un mode de réalisation particulier,
- la figure 9 représente un ordinogramme illustrant une fonction de génération d'empreinte dans un mode de réalisation particulier,
- la figure 10 représente un schéma illustrant la structure de la base de donnée de production de la figure 1 dans un mode de réalisation particulier,
- la figure 11 représente un tableau illustrant un stockage dans la base de donnée de production de la figure 1 dans un mode de réalisation particulier,
- la figure 12 représente un ordinogramme illustrant une fonction de comparaison d'empreinte pour le module de comparaison de la figure 1 dans un premier mode de réalisation,
- la figure 13 représente un ordinogramme illustrant un premier exemple d'une fonction d'agrégation pour le module de comparaison de la figure 1,
- la figure 14 représente un ordinogramme illustrant un second exemple d'une fonction d'agrégation pour le module de comparaison de la figure 1, et
- la figure 15 représente un ordinogramme illustrant une fonction de comparaison d'empreinte pour le module de comparaison de la figure 1 dans un second mode de réalisation.

Les dessins annexés pourront non seulement servir à compléter l'invention, mais aussi contribuer à sa définition, le cas échéant.

Comme on l'a vu, l'expression "documents informatiques" est utilisée ici en un sens assez large. Un document informatique peut être à la base un fichier de type quelconque, bien que des fichiers de type purement textuel, majoritairement textuels, ou à connotation textuelle soient particulièrement visés dans certains modes de réalisation de l'invention.

Concrètement, un document se présente souvent comme un seul fichier informatique physique. Cependant, l'expression "document informatique" couvre aussi le cas où plusieurs documents se trouveraient dans un même fichier physique, ou bien, inversement, celui où un document donné se compose de plusieurs fichiers informatiques physiques. On parle souvent de "fichier logique", pour s'abstraire de la relation entre le document et le ou les fichiers physiques qui contiennent le document ou ses parties.

Le contenu du document peut être "joué" : afficher un texte ou une page web, écouter de la musique, voir une vidéo, ou encore exécuter un programme, par exemple. Dans ce cas, le document n'est en principe pas modifié.

Le contenu du document peut aussi être rendu accessible à l'homme en saisie, c'est-à-dire création/modification. Toute saisie un tant soit peu organisée se traduit par l'existence de différentes versions d'un même document.

À la base, on appelle ici "jeu de documents" un ensemble de versions d'un même document. Toutefois, dans une optique plus étendue, le jeu de documents pourra comprendre plusieurs ensembles de versions de plusieurs documents, dans le cadre d'un projet plus vaste.

### Définitions et conventions de notation

On note *Pi* un jeu de documents numériques. Par exemple, le jeu Pi peut être un projet de logiciel comprenant un ensemble de fichiers informatiques de type dit "sources" (c'est-à-dire comprenant du code informatique non exécutable directement et destinés à être compilés en une suite d'instructions exécutables), et de documents numériques annexes, tels que des fichiers de type texte comprenant une description, une documentation, et/ou l'ensemble des documents préparatoires du logiciel. Le jeu *Pi* peut également être constitué de fichiers organisés à l'aide d'une base de données, de fichiers de type XML (pour "eXtensible Markup Language" ou langage de balisage extensible) ou encore SVG (pour "Scalable Vector Graphics" ou graphiques vectoriels extensibles).

Un état *j* du jeu *Pi* est défini comme l'ensemble des documents numériques du jeu *Pi,* dans l'état où ils se présentent à un instant donné, par exemple à une date *Tij.* On comprend qu'un état *j2* du jeu *Pi* peut différer d'un état *j1* de ce jeu, par exemple par la présence de documents numériques supplémentaires, par l'absence de certains documents numériques et/ou encore par la présence de documents numériques de contenu différent.

L'état *j* du jeu *Pi* est noté *Sij.*

Dans certains cas, et en particulier lorsque le jeu *Pi* comprend un projet de logiciel, l'état *Sij* peut être vu comme une version du jeu de documents *Pi.* Il peut s'agir d'une version destinée à la distribution, ou bien d'une version interne de travail : par exemple, un état *Sij* d'un projet de logiciel peut ne pas être mis en production, en particulier s'il ne constitue pas un état fonctionnel du logiciel.

Un jeu *Pi* peut se trouver dans des états *Sij*, avec *j* compris entre 1 et un entier Ji. Formellement :

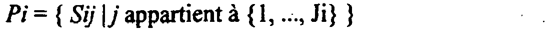

Chaque état *Sij* est constitué de l'ensemble des documents numériques composant le jeu *Pi* à la date *Tij* dans leur état particulier. Le cas échéant, l'état dudit document à la date *Tij* peut différer de son état à une date différente.

Un document particulier *l* de l'état *j* du jeu de document *Pi* est noté *Oijl.*

Autrement dit, l'état particulier d'un document *Oijl* dans l'état général *Sij* du jeu *Pi* peut être différent de son état *Oij'l'* dans un état général *Sij'* différent du jeu *Pi.*

L'état *Sij* est constitué de l'ensemble des documents *Oijl,* avec *1* compris entre 1 et un entier Lij. Formellement :

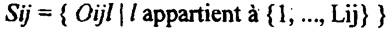

Chaque état *Sij* peut présenter au moins un contributeur identifié *Aij*. On entend par contributeur une personne ayant créé l'état *Sij,* ou ayant participé à la création de cet état.

Pour la clarté de la présente description, les indices associés à une lettre majuscule seront parfois représentés séparés les uns des autres par une virgule (","). Cependant, cette représentation ne sera utilisée que dans des cas susceptibles d'ambiguïté, pour éviter d'alourdir la lecture. Par exemple, l'état *j* d'un jeu de documents *i* sera noté *Sij,* tandis que l'état 12 ("douze") d'un jeu de documents 1 ("un") sera de préférence noté *S1,12.*

### Outil de gestion selon l'invention

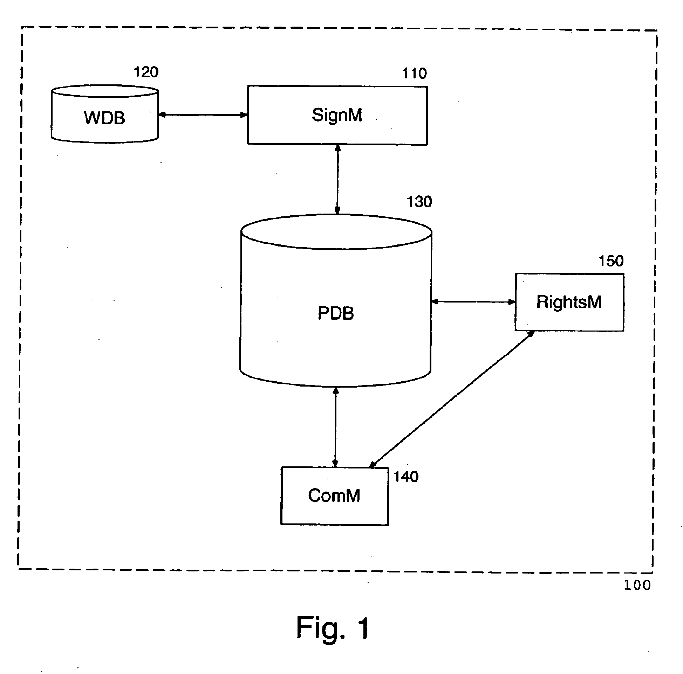

En référence à la figure 1, l'outil de gestion de documents numériques 100 comprend un module de génération d'empreinte SignM 110 agencé de manière à être capable d'associer à un jeu de documents *Pi* une empreinte numérique *Ei* comprenant un ensemble de signatures numériques caractéristiques du contenu desdits documents.

Le module SignM 110 est agencé de manière à être capable d'interagir avec une base de données de travail WDB 120. La base WDB 120 est capable de mémoriser au moins temporairement des données de travail pour le module SignM 110. On comprend que la base WDB 120 comprend un espace de stockage de données organisé, lequel peut prendre la forme d'une base de données sur un support de mémoire permanente (par exemple, de type disque dur) ou encore d'une mémoire temporaire adressable (par exemple, de type "RAM").

L'outil 100 comprend en outre une base de données de jeux de documents PDB 130 capable de maintenir des données relatives à différents jeux de documents *Pi.* En particulier, la base PDB 130 est capable de maintenir les empreintes *Ei* de jeux de document *Pi.* La base PDB 130 peut prendre la forme d'une base de donnée organisée sur un support de mémoire permanente, par exemple de type disque dur.

Le module SignM 110 est agencé de manière à être capable d'interagir avec la base PDB 130, en particulier pour stocker les empreintes *Ei* générées par le module SignM 110.

L'outil 100 comprend encore un module de comparaison de jeux de documents ComM 140 agencé de manière à être capable d'identifier des signatures communes à des jeux de documents *Pi* différents. Le cas échéant, le module ComM 140 est capable de déterminer une dépendance entre ces jeux de documents.

Le module ComM 140 est capable d'interagir avec la base PDB 130 de manière à extraire de la base PDB les empreintes *Ei* générées à partir de jeux de documents *Pi* à comparer, ainsi que des données associées à ces empreintes, le cas échéant.

L'outil 100 comprend enfin un module de gestion de droits RightsM 150 agencé de manière à être capable d' interagir avec la base PDB 130 et le module de ComM 140 pour établir des données utiles à la détermination de droits sur les documents.

### Module de génération d'empreinte

Le module SignM 110 comprend une fonction de génération d'empreinte de document signO( ) capable d'établir une empreinte numérique de document *Eijl* caractéristique du contenu d'un document *Oijl.* Une empreinte numérique de document *Eijl* comprend un ensemble de signatures numériques générées selon le contenu du document *Oijl.*

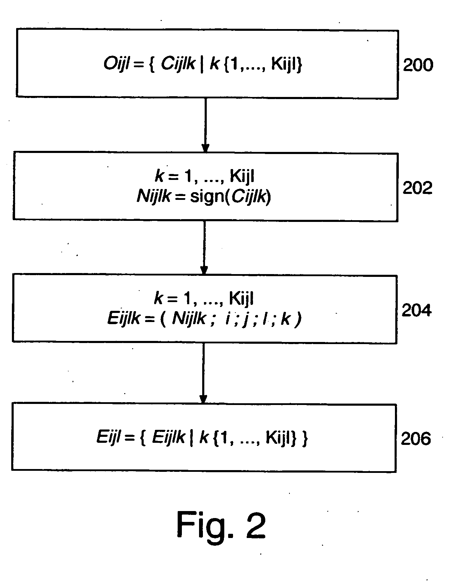

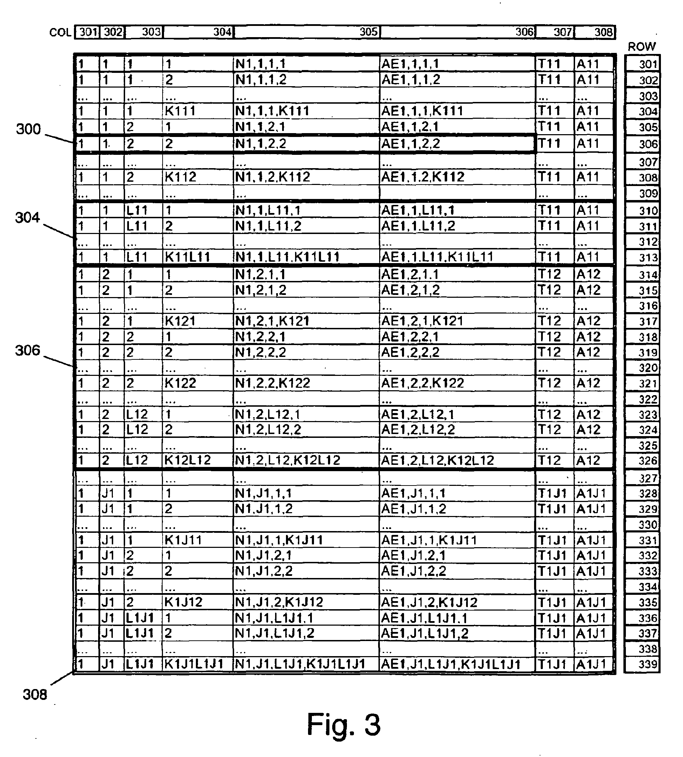

La fonction signO( ) est décrite de manière générale à l'aide des figures 2 et 3.

La fonction signO( ) est agencée de manière à être capable de décomposer un document *Oijl* en éléments de document *Cijlk* selon une règle choisie (étape 200). La fonction signO( ) est en outre agencée de manière à établir pour chaque élément *Cijlk* une valeur de signature numérique *Nijlk* caractéristique du contenu de cet élément (étape 202). Ceci peut se faire par l'appel d'une fonction de signature sign( ). La fonction signO( ) est encore agencée de manière à associer la signature *Nijlk* caractéristique d'un élément *Cijlk* et une référence à cet élément en une empreinte d'élément, ou élémentaire, *Eijlk* (étape 204). La référence à l'élément *Cijlk* peut comprendre la valeur des indices *i, j, l* et k. Chaque empreinte élémentaire *Eijlk* peut être stockée dans un tableau d'empreinte élémentaire SignETab[] maintenant en relation une référence à l'élément *Cijlk* et la valeur de la signature *Nijlk.*

En option, un attribut d'élément *AEijlk* peut être associé à chaque élément *Cijlk.* L'attribut d'élément *AEijlk* peut être stocké dans le tableau SignETab[]. Un attribut d'élément *AEijlk* peut comprendre la valeur d'un nombre de lignes de code, par exemple dans le cas où l'élément est une fonction et l'objet un fichier source. L'attribut d'élément *AEijlk* peut encore comprendre la valeur d'un indice de pertinence du contenu de l'élément *Cijlk.* Un ou plusieurs attributs d'éléments supplémentaires peuvent être stockés dans le tableau SignETab[].

Le tableau 300 de la figure 3 illustre un exemple de réalisation d'un tableau SignETab[] pour l'élément C1, 1,2,2.

L'empreinte *Eijl* caractéristique du contenu du document *Oijl* comprend l'ensemble des empreintes élémentaires *Eijlk, k* étant un entier naturel variant entre 1 et un entier naturel Kijl (étape 206). Le cas échéant, l'empreinte *Eijl* comprend en outre l'ensemble des attributs d'élément *AEijlk* associés aux éléments *Cijlk* des empreintes élémentaires *Eijlk.*

La base WDB 120 stocke, au moins temporairement, l'empreinte *Eijl,* en relation avec une référence de temporalité *TPijl* du document *Oijl.* Par exemple, la référence de temporalité *TPijl* peut comprendre la date *Tij* associée à l'état *Sij.* La référence de temporalité *TPijl* pourrait également comprendre une date *Tijl* associée au document *Oijl,* par exemple une date de dernière modification de ce document.

La base WDB 120 peut maintenir en relation, par exemple dans un tableau d'empreinte de document SignOTab[]:
- un identifiant de document *Oijl*, par exemple un identifiant composé de la valeur des indices *i*, *j* et *l*,
- une référence à chacune des empreintes élémentaires *Eijlk* du document *Oijl,* par exemple une référence composée des indices *i*, *j*, *l* et *k*, et
- la valeur de la référence de temporal ité *TPijl* du document *Oijl*, par exemple la date *Tij.*

En option, un attribut de document *AOijl* peut être associé à chaque document *Oijl*. L'attribut de document *AOijl* peut être stocké dans le tableau SignOTab[]. Un attribut de document *AOijl* peut comprendre la valeur d'une taille de fichier informatique, l'identité d'un contributeur *Aij* ou encore une note qualifiant un niveau de confiance dans la référence de temporalité *TPijl.* Un ou plusieurs attributs de document supplémentaires peuvent être stockés dans le tableau SignOTab[], par exemple de manière à pouvoir associer à un document *Oijl,* à la fois une identité de contributeur *Aij* et un indice de confiance dans la référence de temporalité *TPijl.*

La structure des tableaux décrite ici vise avant tout à faire comprendre l'invention. D'autres structures du tableau SignOTab[] peuvent ainsi être envisagées en pratique. Par exemple, le tableau SignOTab[] peut comprendre un identifiant d'empreinte *Eijl* et cet identifiant peut être lié au document *Oijl.* Le tableau SignOTab[] peut également comprendre la valeur de la signature *Nijlk* de chacune des empreintes élémentaires *Eijlk* du document en question, ou encore l'ensemble des empreintes élémentaires *Eijlk* à la place, ou en plus, des références à ces empreintes. Par exemple, une mise en oeuvre de l'invention peut consister à construire, pour un document *Oijl* particulier, un tableau dont chaque ligne comprend un identifiant d'un élément de document *Cijlk* (par exemple, la valeur des indices *i,j, l* et *k*)*,* la valeur de la signature *Nijlk* de cet élément, la valeur de la référence de temporalité *TPijl* du document, et, le cas échéant, la valeur de l'attribut de document *AOijl* du document *Oijl* et la valeur de l'attribut d'élément *AEijlk* de l'élément, ce tableau étant rempli de manière à couvrir l'ensemble des éléments *Cijlk* du document *Oijl.*

Sur la figure 3, le tableau 304, constitué des colonnes COL301 à COL308 et des lignes ROW310 à ROW313, illustre une telle réalisation pour un objet *O1,1,L11.* Dans ce tableau 304, un identifiant de contributeur *A11* est stocké en tant qu'attribut de document *AO1*,*1,L11* (COL308), et la date *T11* est stockée en tant que référence de temporalité *TP1,1,L11* (COL307).

Le module SignM 110 comprend en outre une fonction de génération d'empreinte d'état signS( ) agencée de manière à être capable d'établir une empreinte d'état *Eij* caractéristique de l'état *Sij* d'un jeu Pi.

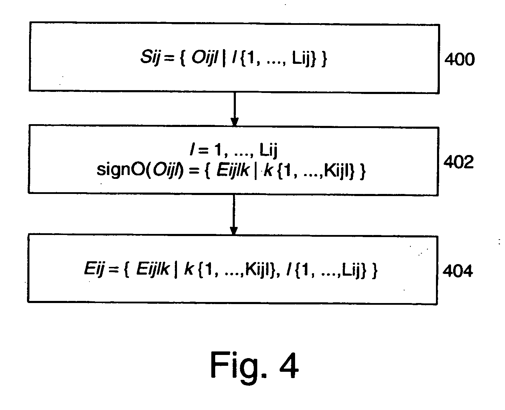

La fonction signS( ) est décrite à l'aide de la figure 4.

Un état *Sij* comprend un ensemble de documents *Oijl* à un instant *Tij, l* étant un entier naturel variant entre 1 et un entier naturel Lij (étape 400). La fonction signS( ) est agencée de manière à appeler successivement la fonction signO( ) pour chacun des documents *Oijl* de l'état *Sij* afin d'obtenir pour chaque document *Oijl* une empreinte de document *Eijl* comprenant un ensemble d'empreintes élémentaires *Eijlk* (étape 402).

L'empreinte d'état *Eij* comprend l'ensemble des empreintes élémentaires *Eijlk, k* variant entre 1 et Kijl et *l* variant entre 1 et Lij (étape 404).

La base WDB 120 stocke, au moins temporairement, l'empreinte *Eij.*

La base WDB 120 peut maintenir en relation, par exemple dans un tableau d'empreinte d'état SignSTab[]:
- un identifiant de l'empreinte d'état *Eij*, par exemple un identifiant composé de la valeur des indices *i* et *j*, et
- une référence à chacune des empreintes de document *Eijl* de l'état *Sij*, par exemple composée des indices i, j, et l.

Comme expliqué plus haut, la structure du tableau SignSTab[] peut être différente en pratique. Par exemple, une mise en oeuvre de l'invention peut consister à construire un tableau rassemblant l'ensemble des empreintes de document *Eijl,* par exemple dans la réalisation pratique décrite plus haut, des documents de l'état *Sij.* Sur la figure 3, le tableau 306, constitué des colonnes COL301 à COL308 et des lignes ROW314 à ROW326, illustre cet exemple de réalisation pour l'état *S1,2.*

En option, un attribut d'état *ASij* peut être associé à chaque état *Sij*. Cet attribut *ASij* peut être stocké dans le tableau SignSTab[]. Par exemple, l'attribut d'état *ASij* pourrait comprendre un indice, ou note, qualifiant la fiabilité de la date *Tij,* et/ou un indice qualifiant la fiabilité de l'identité du contributeur *Aij* (par exemple, une valeur d'indice minimale pour une identification à l'aide d'un nom de connexion, ou "login", et une valeur d'indice maximale pour une identification à l'aide d'une procédure d'authentification certifiée par un tiers).

Le module SignM 110 comprend encore une fonction de génération d'empreinte de jeu de documents signP( ) agencée de manière à être capable d'établir une empreinte de jeu de documents *Ei* caractéristique du jeu *Pi.*

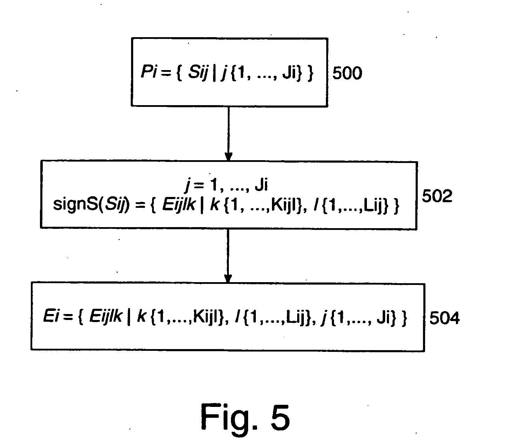

La fonction signP( ) est décrite à l'aide de la figure 5.

Le jeu de documents *Pi* comprend un ensemble d'états *Sij,j* étant un entier naturel variant de 1 à un entier naturel Ji (étape 500). La fonction signP( ) est agencée de manière à appeler successivement pour chaque état *Sij* du jeu *Pi* la fonction signS( ) afin d'obtenir pour chaque état *Sij* une empreinte d'état *Eij* comprenant un ensemble d'empreintes d'éléments *Eijlk, k* variant entre 1 et Kijl et *l* variant entre 1 et Lij (étape 502).

Une empreinte de jeu de documents *Ei* comprend l'ensemble des empreintes élémentaires *Eijlk, k* variant de 1 à Kijl, *l* variant de 1 à Lij et *j* variant de 1 à Ji (étape 504).

La base WDB 120 stocke, au moins temporairement, l'empreinte *Ei.*

La base WDB 120 peut maintenir en relation, par exemple dans un tableau d'empreinte de jeu de document SignPTab[]:
- un identifiant de l'empreinte de jeu de documents *Ei,* par exemple un identifiant composé de la valeur de l'indice *i*, et
- une référence à chacune des empreintes d'état *Eij,* par exemple composée des indices *i* et *j*.

Comme expliqué plus haut, la structure du tableau SignPTab[] peut être différente en pratique. Une mise en oeuvre de l'invention peut consister à construire un tableau rassemblant l'ensemble des empreintes d'états *Eij* du jeu de documents *Pi,* par exemple dans la réalisation pratique décrite plus haut. Sur la figure 3, le tableau 308, constitué des colonnes COL301 à COL308 et des lignes ROW301 à ROW339, illustre un tel exemple de réalisation pour le jeu de document *P1*. Dans ce tableau 308, chaque ligne maintient :
- une référence à un élément de document constituée d'une colonne COL301 stockant la valeur de l'indice *i*, d'une colonne COL302 stockant la valeur de l'indice *j*, d'une colonne COL303 stockant la valeur de l'indice *l*, et d'une colonne COL304 stockant la valeur de l'indice *k*, et
- la valeur de la signature de cet élément de document dans une colonne COL305,
- la valeur de l'attribut de cet élément dans une colonne COL306,
- la valeur de la référence de temporalité du document dont est issu cet élément dans une colonne COL307, et
- la valeur de l'attribut du document dont est issu cet élément dans une colonne COL308.

Le module SignM 110 comprend une fonction de datation de signature signTp( ) agencée de manière à être capable d'associer à chaque valeur de signature *Niq* différente d'un jeu *Pi* dont l'empreinte est stockée dans la base WDB 120 une donnée de signature *Viq* en fonction des références de temporalité *TPijl* des documents *Oijl* auxquels ladite signature est associée dans la base WDB 120.

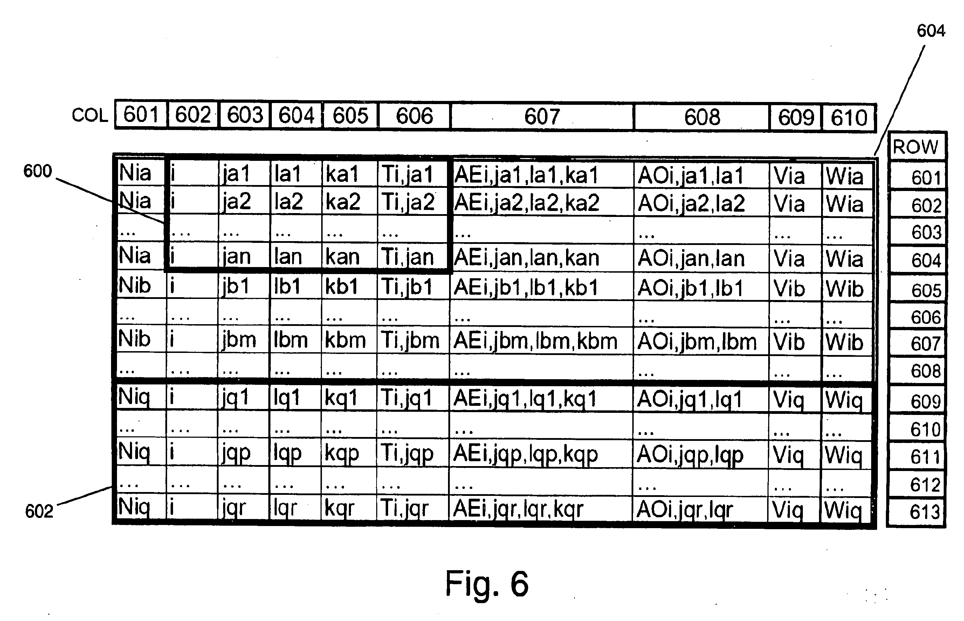

La fonction signTp( ) est décrite à l'aide de la figure 6.

La fonction signTp( ) est agencée de manière à établir pour une valeur de signature *Niq* particulière de la base WDB 120, l'ensemble des empreintes élémentaires *Eijlk* contenant cette valeur de signature, et, à chaque fois, la référence de temporalité *TPijl* de l'empreinte de document *Eijl* en relation avec l'empreinte élémentaire *Eijlk* dans la base WDB 120.

La fonction signTp( ) est en outre agencée de manière à maintenir en relation pour cette valeur de signature *Niq,* par exemple dans un tableau de signature SignTb[ ] :
- un identifiant d'une empreinte élémentaire *Eijlk* contenant ladite signature particulière, par exemple comprenant les valeurs *i, j, l,* et *k,* et
- la référence de temporalité *TPijl,* par exemple la date *Tij,* de l'empreinte de document *Eijl* en relation avec l'empreinte élémentaire *Eijlk* dans la base WDB 120;
la fonction SignTp( ) étant agencée de manière à remplir le tableau SignTb[ ] de telle sorte qu'il contienne un identifiant de chaque empreinte d'élément *Eijlk* stockée dans la base WDB 120 dans laquelle se retrouve cette valeur de signature.

Sur la figure 6, le tableau 600 illustre un exemple de réalisation du tableau SignTb[ ] pour une valeur de signature *Nia.* Ce tableau 600 contient n lignes, représentées par les lignes ROW601 à ROW604, n étant le nombre d'empreintes d'éléments *Eijlk* comprenant la valeur de signature *Nia.* Les quadruplets {*i,ja1, la1, ka1*}, {*i, ja2, la2, ka2*} à {*i, jan, lan, kan*} représentent chacun un identifiant d'une empreinte d'élément contenant la valeur de signature *Nia.* Ces quadruplets sont stockés dans les colonnes COL602 à COL605 du tableau 600. La colonne COL606 du tableau 600 stocke, en tant que références de temporalité, les dates *Ti,ja1* à *Ti,jan,* dans les lignes ROW601 à ROW604.

Le tableau SignTb[ ] peut être stocké, au moins temporairement, par exemple dans la base WDB 120.

La fonction signTp( ) est répétée de manière à créer un tableau SignTb[ ] pour chacune des différentes valeurs de signature *Niq* existant dans les empreintes de documents *Eijl* mémorisées dans la base WDB 120.

La cas échéant, le tableau de signature SignTb[ ] peut comprendre en outre, pour chaque empreinte élémentaire *Ni,jqp,lqp,kqp* dont la signature vaut *Niq,* la valeur d'attribut de cet élément *AEi,jqp,lqp,kqp* et la valeur d'attribut du document *AOi,jqp,lqp* comprenant cet élément.

La fonction signTp( ) est en outre agencée de manière à affecter à chaque tableau SignTb[ ] mémorisé dans la base WDB 120, et relatif à une valeur de signature *Niq* particulière, au moins une donnée de signature *Viq.*

La donnée de signature *Viq* peut être obtenue en appliquant une fonction de datation dat( ) prédéterminée qui utilise les références de temporalités du tableau SignTb[ ]. Autrement dit, la donnée de signature *Viq* associée au tableau SignTb[ ] peut être fonction des références de temporalité *TPijl,* par exemple les dates *Tij,* associées aux identifiants d'empreinte *Eijl* de ce tableau. Par exemple, la donnée de signature *Viq* peut être la date *Tij* la plus ancienne contenu dans le tableau SignTb[ ].

Lorsque le tableau de signature SignTb[ ] stocke des valeurs d'attributs de document *AOi,jqp,lqp,* la fonction dat( ) peut être agencée de manière à déterminer la donnée de signature *Viq* en fonction, en outre, de ces valeurs d'attributs. Par exemple, lorsque les attributs de document *AOi,jqp,lqp* comprennent un indice de fiabilité de la référence de temporalité *TPi,jqp,lqp,* la fonction dat( ) peut être agencée de manière à déterminer la date *Ti,jqp* la plus ancienne du tableau SignTb[ ], tout en excluant, pour cette détermination, les dates *Ti,jqp* associées dans le tableau SignTb[ ] à une valeur d'attribut de document *AOi,jqp,lqp* inférieure à une valeur seuil.

La fonction signTp( ) peut en outre être agencée de manière à affecter à chaque tableau SignTb[ ] mémorisé dans la base WDB 120, et relatif à une valeur de signature *Niq* particulière, une donnée de document *Wiq.* La donnée de document *Wiq* peut être obtenue en appliquant une fonction d'authentification aut( ) prédéterminée qui utilise les attributs de document *AOi,jqp,lqp* du tableau SignTb[ ]. En outre, la fonction aut( ) peut utiliser les données de signature *Viq,* et/ou encore les références de temporalité *TPi,jqp,lqp.* Par exemple, la fonction aut( ) peut être agencée de manière à déterminer en tant que donnée *Wiq* la valeur de l'attribut de document *AOi,jqp,lqp* dont la référence de temporalité *TPi,jqp,lqp* associée est la plus ancienne. Dans le cas où la référence de temporalité *TPi,jqp,lqp* comprend une date *Ti,jqp* et la donnée de document un identifiant de contributeur *Aijqp,* une telle fonction aut( ) peut être agencée de manière à établir en tant que donnée de document *Wiq* l'identifiant du contributeur le plus ancien associé à la valeur de signature particulière *Niq.*

En pratique, une mise en oeuvre peut consister à construire, pour une valeur de signature particulière *Niq,* un tableau, par exemple le tableau 602 de la figure 6, dans lequel chaque ligne comprend :
- une colonne stockant la valeur de ladite signature *Niq* (COL601),
- des colonnes stockant les valeurs *i, jqp, lqp* et *kqp* des indices de l'élément de document dont le contenu a généré la valeur de signature *Niq* (COL602 à COL605),
- la référence de temporalité *TPi jqp, lqp,* ici la date *Ti,jqp,* du document dont est issu ledit élément de document (COL606),
- la valeur de la donnée de signature *Viq* (COL609), et, le cas échéant,
- la valeur de l'attribut dudit élément *AEiqp,jqp,lqp,kqp* (COL607),
- la valeur de l'attribut du document dont est issu ledit élément de document *AOi,jqp,lqp* (COL608),
- la valeur de la donnée de document *Wiq* (COL610);
ce tableau est rempli de manière à stocker l'ensemble des empreintes élémentaires contenant la valeur de signature *Niq,* c'est-à-dire ici, les r empreintes *Ei,jq1,lq1,kq1 à Ei,jqr,lqr,kqr.*

En option, la fonction signTp( ) peut en outre être agencée de manière à établir, pour chaque valeur de signature *Niq,* une donnée d'élément *Ziq* (non représentée sur la figure 6) en fonction des valeurs des attributs d'éléments *AEi,jqp,lqp,kqp* associés à cette valeur de signature *Niq.* Par exemple, la donnée d'élément *Ziq* peut comprendre la valeur maximale des valeurs d'attributs d'éléments *AEi,jqp,lqp,kqp.*

La fonction signTp( ) est en outre agencée de manière à être capable de rassembler les données de signature *Viq* des tableaux de signature SignTb[ ]. Par exemple, la fonction signTp( ) est agencée de manière à construire un tableau d'empreinte de jeu de document temporalisée TempSignPTb[] stockant en relation mutuelle :
- un identifiant du jeu de documents Pi, par exemple l'indice *i*
- chaque valeur de signature *Niq* différente
- la donnée de signature *Viq* associée à ladite valeur de signature *Niq.*

Cela revient, dans l'exemple de la figure 6, à agencer la fonction signTp() de manière à extraire la donnée de signature *Viq,* et la valeur de l'indice *i* d'une ligne quelconque contenant la valeur de signature *Niq*, et ce pour chaque valeur de signature *Niq* différente. Sur la figure 6, par exemple, un tableau TempSignPTb[] pourrait être constitué de l'intersection des colonnes COL601, COL602 et COL609 avec les lignes ROW601, ROW605 et ROW609.

On obtient ainsi un stockage particulièrement léger de l'empreinte de jeu de documents. Dans le cas où la référence de temporalité comprend la date *Tij,* et où la fonction dat() est agencée de manière à déterminer en tant que donnée *Viq* la plus ancienne des dates *Tij,* cette donnée vaut date de première apparition de la valeur de signature dans le jeu de documents *Pi*. L'empreinte du jeu de document est ainsi constituée de l'ensemble des signatures et de leur date de première apparition. D'autres informations pourront être stockées en fonction de la fonction dat() comme on le verra plus loin.

Le cas échéant, la fonction dat( ) peut prendre en compte les données de document *Wiq* et les données d'éléments *Ziq.*

Dans un autre mode de réalisation, le tableau TempSignPTh[] peut maintenir en outre une référence à chaque empreinte d'élément *Eijlk*, par exemple comprenant les valeurs des indices *i, j, k* et *l.* Ceci permet de maintenir dans la base WDB 120 un lien entre une référence à un élément de document et la donnée de signature correspondante.

Dans un autre mode de réalisation encore, le tableau TempSignPTb[] peut maintenir en outre une référence à chaque empreinte d'élément *Eijlk,* par exemple comprenant les valeurs des indices *i, j, k* et *l,* et une référence au document *Oijl,* par exemple comprenant les indices *i*, *j* et *l*. Ainsi, pour un document *Oijl* particulier, il sera possible d'établir les données de signatures *Viq* des éléments de document *Cijlk* correspondant à ce document. Lorsque la donnée *Viq* est établie comme étant la plus ancienne date *Tij,* il est possible de déterminer la date de première apparition d'un élément de document *Cijlk* dans le jeu *Pi*, indépendamment du document *Oijl* dans lequel il est apparu pour la première fois. Ainsi, il est possible d'identifier les éléments d'un document produit avant la création de ce document au sein d'un jeu de document.

Une mise en oeuvre pratique du tableau TempSignPTb[] peut consister à construire un tableau, tel que, par exemple, le tableau 604 de la figure 6, dans lequel chaque ligne présente :
- une colonne stockant une valeur de signature *Niq* (COL601),
- une référence à un élément de document *Ci,jqp,lqp,kqp* dont est issue cette valeur de signature *Niq,* ici sous la forme des valeurs des indices *i, j, l* et *k*, (COL602 à COL605)
- la référence de temporalité *TPi,jqp,lqp* du document *Oi,jqp,lqp* dont est issu cet élément de document *Ci,jqp,lqp,kqp* (COL606), ici la date *Tiqp,jqp,*
- la valeur de la donnée de signature *Viq* (COL609), et, le cas échéant,
- la valeur de l'attribut *AEi,jqp,lqp,kqp* de l'élément *Ci,jqp,lqp,kqp* (COL607),
- la valeur de l'attribut *AOi,jqp,lqp* du document *Oi,jqp,lqp* dont est issu l'élément de document *Ci,jqp,lqp,kqp* (COL608),
- la valeur de la donnée de document *Wiq* (COL610);
ledit tableau étant rempli de manière à rassembler l'ensemble des valeurs de signature *Niq* du jeu de documents *Pi*. Autrement dit, la mise en oeuvre décrite ici consiste à rassembler, dans un même tableau, les tableaux du type du tableau 602 construits pour chacune des valeurs de signature *Niq* du jeu de documents *Pi.*

Le module SignM 110, et en particulier la fonction signTp( ), est capable d'interagir avec la base PDB 130 de manière à stocker le résultat du rassemblement des données de signature des tableaux de signature.

Par exemple, la base PDB 130 peut ainsi maintenir une donnée relative à la période d'existence d'une valeur de signature dans le jeu de documents *Pi.*

Dans un mode de réalisation particulier, l'empreinte de document *Eijl* peut être réduite de manière à limiter la taille de la base de donnée ou pour faciliter une recherche ultérieure de signatures. Par exemple, les références à certaines des empreintes élémentaires (et les empreintes élémentaires elles-mêmes) peuvent être supprimées en fonction des valeurs des références de temporalité, des données d'attribut éléments et/ou les données d'attribut de document.

### Fonction de génération d'empreinte de document

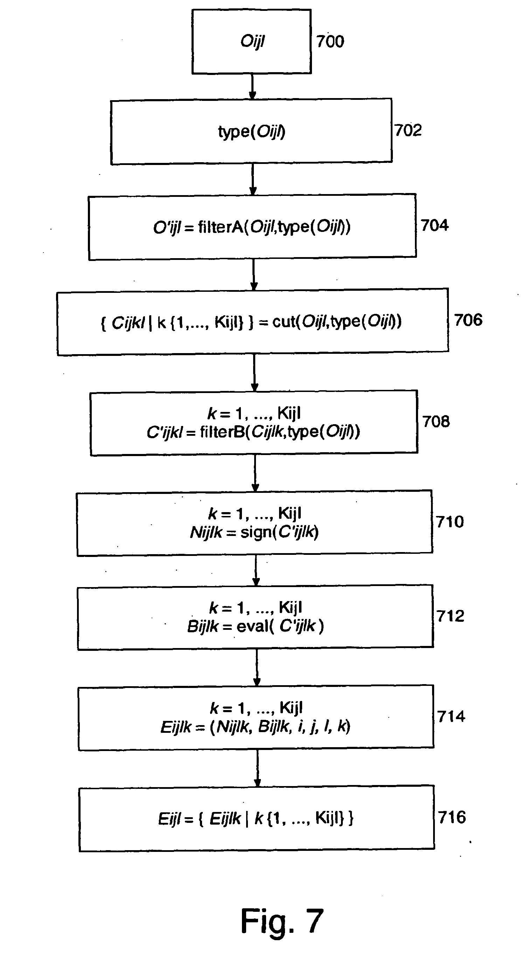

La fonction signO( ) est décrite en détail, dans un mode de réalisation particulier, à l'aide de la figure 7.

On considère un document *Oijl,* c'est-à-dire un document *l* particulier de l'état *Sij* d'un jeu de documents *Pi* (étape 700).

La fonction signO( ) est agencée de manière à appeler une fonction type( ), elle-même agencée de manière à être capable d'établir une donnée caractéristique du type informatique du document *Oijl* (étape 702).

Par l'expression "type informatique", on entend ici la structure informatique du document *Oijl* dans le sens où cette structure est commune à tous les documents de même type. Le type informatique peut être communément répandu ou faire l'objet de standards, comme par exemple, les fichiers de type "texte", les fichiers de type "Microsoft Word" (marque déposée), les fichiers de type "image" d'un format particulier. Le type peut également être propre à un logiciel ayant généré le document.

La caractérisation du type du document *Oijl,* dans le cas particulier où celui-ci est un fichier, peut se faire par la reconnaissance de l'extension du nom du fichier, par exemple lorsque le document est un fichier créé dans un environnement de type "Microsoft Windows" (marque déposée).

La caractérisation peut également se faire par la reconnaissance dans le fichier de séquences de bits caractéristiques d'un type de fichier. En particulier, la reconnaissance de mots clés caractéristiques dans des fichiers sources peut permettre d'identifier un langage de programmation. Alors, la fonction type( ) est également capable de déterminer pour un fichier de type source le langage utilisé.

La fonction signO( ) est agencée de manière à appeler une fonction de filtre de contenu filterA( ), elle-même agencée de manière à être capable d'établir à partir du document *Oijl* et du type de ce document, un document de contenu épuré *O'ijl.* (étape 704)

Par exemple, la fonction filterA( ) peut être agencée de manière à supprimer des commentaires insérés dans un fichier source, des caractères étrangers à la sémantique du langage de programmation, ou encore des caractères dépendant d'un système d'exploitation particulier.

La fonction filterA( ) est configurée de manière à améliorer la robustesse de la fonction signO( ), et par conséquent, la pertinence de l'empreinte générée par cette fonction. On entend ici par robustesse la capacité de la fonction signO( ) à générer une empreinte de document identique malgré l'apport de modifications que l'on considère non significatives pour ce contenu. Des modifications pouvant être considérées comme non significatives sont par exemple :
- les modifications concernant la seule mise en forme d'un document, par exemple de type texte, ces modifications pouvant avoir été réalisées de manière automatique (par exemple, l'ajout de caractères d'espacement consécutifs ou encore d'une ligne vide), et
- la réécriture d'un contenu, comme, par exemple, le changement des noms de fonction ou de variable, ou encore la suppression ou l'ajout d'une mention de copyright.

On note que la réécriture d'un contenu pourrait être légitime, ou bienveillante, par exemple lorsqu'elle vise à mettre le contenu du document en conformité avec certaines règles formelles ou conventions de nommage. La réécriture pourrait également être malveillante, ou illicite, en particulier lorsqu'elle est réalisée dans le seul but de s'attribuer la qualité d'auteur, ou de dissimuler la réutilisation d'un contenu.

On comprend que l'épuration du document *Oijl* est fonction du type de ce document.

La fonction signO( ) est agencée de manière à appeler une fonction d'extraction de contenu cut( ) capable d'isoler dans un document *O'ijl* des éléments de document *Cijlk,* tels que des fonctions ou procédures dans un document de type code source, par exemple. Cette localisation d'éléments individuels est fonction du type du document *Oijl.* (étape 706)

La fonction cut( ) est agencée de manière à établir à partir du document *O'ijl* un ensemble d'éléments *Cijlk,* où *k* est un entier naturel compris entre 1 et un entier Kijl. Par exemple, la fonction cut( ) peut être agencée de manière à être capable d'extraire d'un document *O'ijl* de type source d'un langage de programmation déterminé un ensemble de fonctions contenues dans cet objet.

La fonction signO( ) est agencée de manière à appeler une fonction de filtre de contenu filterB( ) agencée de manière à être capable d'établir à partir d'un élément *Cijlk,* et du type du document *Oijl,* un élément épuré *C'ijlk.* (étape 708)

De manière analogue à la fonction filterA( ), la fonction filterB( ) peut , par exemple, être agencée de manière à supprimer des commentaires et des caractères étrangers à la sémantique du langage de programmation identifié, et/ou la suppression de caractères dépendant d'un système d'exploitation. La fonction filterB( ) vise à améliorer la robustesse du module SignM 110, au sens exposé plus haut.

La fonction filterB( ) a pour résultat un ensemble d'éléments épurés *C'ijlk,* avec *k* un entier naturel compris entre 1 et un entier Kijl.

La fonction signO( ) est en outre agencée de manière à appeler une fonction de génération de signature sign( ) agencée de manière à être capable d'établir à partir d'un élément épuré *C'ijlk* une signature *Nijlk* caractéristique du contenu de cet élément de document.(étape 710)

La signature *Nijlk* peut prendre la forme d'une chaîne de caractères de longueur déterminée, par exemple une chaîne de caractères ASCII ou hexadécimaux. De préférence, la fonction sign( ) comprend un algorithme de génération de signature dit de "hachage". La signature *Nijlk* est unique pour le contenu d'un élément *C'ijlk* donné. Dans tous les cas, la fonction sign( ) est de préférence déterminée de manière à présenter une forte probabilité de non-occurrence, c'est-à-dire de manière que la probabilité qu'une même signature soit obtenue à partir de contenus différents d'éléments *C'ijlk* soit la plus faible possible. En outre, la fonction sign( ) est choisie non réversible, c'est-à-dire agencée de manière qu'il soit en pratique impossible d'établir le contenu de l'élément à partir de sa signature : entre autres choses, cela autorise le stockage à long terme des signatures sans soucis de confidentialité, car le contenu explicite des documents n'est ni stocké ni divulgué.

On remarque ici que l'utilisation d'une chaîne de caractères de longueur déterminée en tant que signature du contenu d'un document facilite la comparaison de documents car il est plus simple de comparer des objets informatiques de taille constante plutôt que de comparer des objets de tailles différentes, et plus volumineux. En outre, ces chaînes de caractères permettent la comparaison de jeux de documents et peuvent être largement diffusées car elles n'en divulguent pas le contenu.

Ledit algorithme de génération de signature, ou de "hachage", peut être du type MD5 (pour "Message Digest 5") ou SHA-1 (pour "Secure Hash Algorithm"), par exemple.

La fonction sign( ) est appelée pour chaque élément *C'ijlk* de manière à obtenir un ensemble de signatures *Nijlk,* avec *k* un entier naturel variant entre 1 et Kijl, à partir d'un document *Oijl.*

De préférence, la fonction signO( ) est agencée de manière à appeler une fonction de notation eval( ), elle-même agencée de manière à être capable d'associer à une signature *Nijlk* une donnée de pertinence de signature *Bijlk* en tant qu'attribut d'élément *AEijlk.* (étape 712)

On entend ici par pertinence une estimation de l'intérêt d'un élément de document vis-à-vis d'une contribution ou d'une modification apportée au document. La fonction eval( ) peut être agencée de manière à prendre en compte un ou plusieurs critères parmi :
- la taille de l'élément de document, par exemple un nombre de lignes de code, ou de caractères, dans le cas d'une fonction d'un fichier source;
- la présence de la signature dans une liste de signatures associée à un indice de pertinence faible, cette liste pouvant être spécifique à un type de document;
- le nombre de contributeurs à ce document et/ou l'activité en termes de contributions sur ce document.

Bien entendu, cette énumération n'est pas limitative, et la fonction eval( ) peut prendre en compte d'autres critères.

Chaque élément épuré *C'ijkl* peut être considéré comme "atomique", en ce sens qu'il n'est pas intéressant de le découper davantage, car il perdrait alors ce qui est lié à sa nature (propriétés et signification, notamment). Ainsi, sa signature *Nijlk* pourrait être vue comme une "empreinte atomique", par opposition à l'empreinte *Eijl* (globale) du document.

La fonction signO( ) est en outre agencée de manière à associer chaque signature *Nijlk* à une référence de document *Oijl,* par exemple comprenant les indices *i*, *j*, *l* en une empreinte élémentaire *Eijlk.* (étape 714)

La fonction signO( ) permet d'obtenir une empreinte de document *Eijl* caractéristique de l'objet *Oijl* comprenant un ensemble d'empreintes élémentaires *Eijlk, k* variant entre 1 et Kijl. (étape 716).

L'empreinte de document *Eijl* peut être stockée dans la base WDB 120 comme exposé plus haut.

On comprend que la référence de temporalité peut être la date *Tij* de l'état *Sij.* La référence de temporalité pourrait être également donnée par l'indice *j* seul, dans le cas où les *j* sont chronologiquement ordonnés.

Dans un mode de réalisation particulier, l'empreinte de document *Eijl* comprend également un identifiant de contributeur *Aij* en tant qu'attribut de document *AOijl* ayant créé l'état *Sij* ou participé à la création de cet état, en tant que donnée de document.

On a vu que les fonctions filterA( ) et filterB( ) sont agencées de manière à éviter qu'un élément de document génère une signature distincte après des modifications non significatives de son contenu. Cependant, ces fonctions peuvent en outre être agencées de manière que l'empreinte d'un document particulier, dont le contenu a été modifié de manière non significative, diffère partiellement de son empreinte d'origine, dans le but d'obtenir une trace de telles modifications. Ceci peut être réalisé en adaptant les fonctions filterA( ), filterB( ) et cut( ) les unes par rapport aux autres, par exemple de manière à découper un contenu en éléments dont la signature devra ou non changer et à adapter la fonction filterB( ) pour ce faire.

Par exemple, on considère le plus souvent le seul changement des noms de variables à l'intérieur d'une fonction d'un document comme une simple réécriture de contenu. Les fonctions filterA( ), filterB( ) et cut( ) peuvent être agencée de manière à obtenir une empreinte de document contenant certaines signatures identiques relatives au contenu de cette fonction et d'autres signatures différentes de manière à indiquer qu'une réécriture a été réalisée. Par exemple, lorsque la réécriture concerne uniquement le changement du nom d'une fonction, les fonctions filterA( ), filterB( ) et cut( ) peuvent par exemple être agencées de manière que la fonction du document soit décomposée en un premier élément de document correspondant à la partie déclarative de cette fonction et un second élément de document correspondant au corps, ou contenu, de la fonction, et que la signature du premier élément change tandis que celle du second reste inchangée.

Les fonctions filterA( ), filterB( ) et cut( ) peuvent dans certains cas être agencées de manière à conserver un document identique, en particulier en fonction du type de document.

On comprend que la fonction signO( ) doit être robuste pour permettre la comparaison ultérieure d'empreintes. Pour que deux empreintes puissent être comparées (c'est-à-dire pour que l'on recherche des signatures communes), un même document doit nécessairement générer la même empreinte quelque soit le module SignM 110 utilisé. Les fonctions cut(), filterA( ), et filterB( ) ont donc vocation, à priori, à être divulguées et standardisées si l'on souhaite employer des outils de génération d'empreinte différents. Cependant, cette divulgation favorise la mise en place de stratégies destinées à mettre en défaut la robustesse de ces filtres, en particulier vis-à-vis des réécritures, dans le cas d'une réécriture de contenu malveillante notamment.

Dans un mode de réalisation particulier de la fonction signO( ), une fonction de vérification ver( ) peut être appelée préalablement à l'étape 706 de manière à assurer la conformité du code source avec certaines règles formelles, dépendant éventuellement du langage de programmation. Par exemple, lorsque le document *Oijl* est un fichier source, la fonction de vérification ver( ) peut comprendre un analyseur grammatical de code source capable d'établir une représentation abstraite du code source conforme aux règles de syntaxe et de grammaire du langage. Cet analyseur grammatical peut lui-même être insensible aux modifications non significatives ou à la réécriture de contenu. Par exemple, la fonction ver( ) peut être agencée de manière à établir un arbre syntaxique abstrait ou "AST" (pour Abstract Syntax Tree). Ce faisant, la fonction signO( ) est plus robuste au sens exposé plus haut.

### Fonction de datation de signature

Dans un mode de réalisation particulier, la fonction dat( ) est agencée de manière à établir en tant que donnée de signature *Viq* une période d'existence de la signature *Niq* considérée.

Dans ce mode de réalisation, la donnée de signature *Viq* peut comprendre une date d'apparition *TAiq,* ou de première présence, de la valeur de signature *Niq* dans le jeu de document *Pi* et une date de disparition *TDiq,* ou date de dernière présence. Dans ce cas, la fonction dat( ) peut être agencée de manière à établir, en tant que date d'apparition *TAiq,* la plus ancienne des références de temporalités, par exemple la plus ancienne des dates *Ti,jq* du tableau SignTb[ ], et la plus récente de ces dates en tant que date de disparition *TDiq.*

Dans une variante de réalisation, la fonction dat( ) est agencée de manière à établir en tant que donnée de signature *Viq* un ensemble de périodes d'existence. La fonction dat( ) peut être agencée de manière à interagir avec la base WDB 120 de façon à extraire de cette base un tableau d'états STb[ ] rassemblant chacune des dates *Tij* différentes présentes dans l'empreinte *Ei* du jeu de document *Pi.* La fonction dat( ) peut être agencée de manière à comparer chacune des dates *Ti,jqp* du tableau SignTb[ ] aux dates rassemblées dans tableau STb[ ] de manière à déterminer des dates *Tij* auxquelles la signature considérée est, ou le cas échéant n'est pas, associée.

À la place de la date *Tij,* la fonction dat( ) peut être agencée de manière à travailler sur des identifiants de version, par exemple les différentes valeurs de l'indice *j*.

Dans un autre mode de réalisation, les états *Sij* sont ordonnés, c'est-à-dire que la supériorité d'un indice *j*' à un indice *j* implique que la date *Tij*' est plus récente que la date *Tij.*

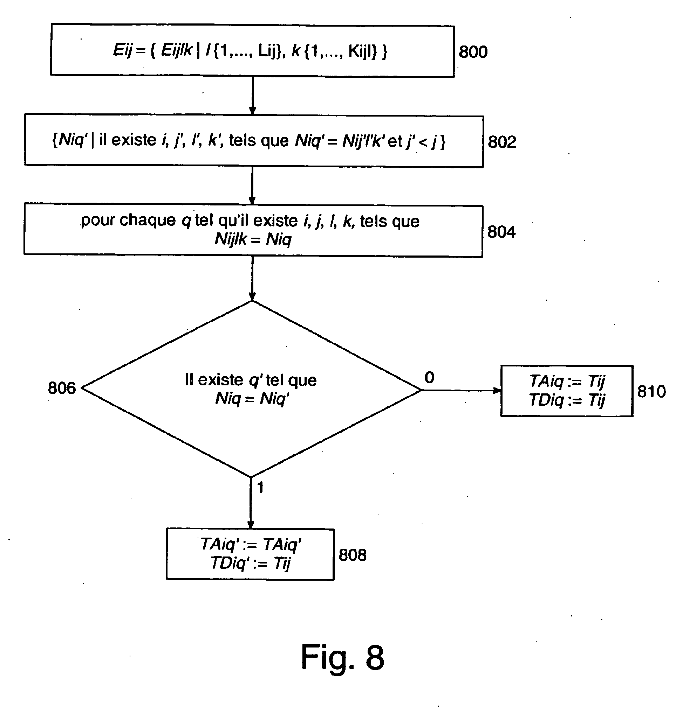

La fonction dat( ) peut alors être agencée de manière à établir les dates *TAiq* et *TDiq* de manière différente. La fonction dat( ) est décrite à l'aide de la figure 8, dans ce mode de réalisation particulier.

La fonction Dat( ) est agencée de manière à être capable de comparer l'état *Sij,* caractérisé par son empreinte d'état *Eij* constituée de l'ensemble des empreintes d'éléments *Eijlk* (étape 800) à l'ensemble des états *Sij'* antérieurs caractérisé par l'ensemble des valeurs de signature *Niq'* associées à ces états antérieurs, c'est-à-dire pour lesquelles il existe un quadruplet *i*, *j*', *l*' et *k*', tel que la valeur de signature *Nij'l'k'* vaille *Niq'* (étape 802). Pour chacune des valeurs de signature *Niq* de l'état *Sij,* c'est-à-dire pour tout entier *q* tel qu'il existe un quadruplet *i*, *j*, *l* et *k*, tel que *Nijlk* vaille *Niq* (étape 804), la fonction dat( ) vérifie s'il existe une valeur de signature *Niq*' associée un état *Sij*' dans la base WDB 120 (étape 806).

Si oui (étape 808), alors la valeur de signature *Niq* existait dans un état antérieur*j*'du jeu de documents *Pi.* La date d'apparition *TAiq'* de la valeur de signature *Niq*' dans le jeu de documents *Pi* reste inchangée. La date de disparition *TDiq' de* la valeur de signature *Niq'* dans le jeu de documents *Pi* reçoit la date *Tij* de l'état *Sij*.

Sinon (étape 810), la valeur de signature *Niq* est nouvelle dans le jeu de documents *Pi.* Les dates d'apparition *TAiq* et de disparition *TDiq* prennent toutes deux la valeur de la date *Tij* de l'état *Sij.*

Dans ce mode de réalisation, l'empreinte temporalisée du jeu de document peut être rapidement mise à jour lors de l'ajout d'une empreinte d'état ultérieur *Eij*, par exemple d'un dernier état connu. Ce mode de réalisation particulier permet de construire l'empreinte temporalisée d'un jeu de document par ajouts successifs de ses empreintes d'état successives. Par mise à jour, on entend ici l'ajout des valeurs de signatures qui n'existaient pas à l'état précédent et le calcul des données de signatures *Viq* qui sont modifiées par l'ajout du nouvel état.

Autrement dit, la fonction dat( ) peut être agencée de manière à comparer un état *Sij* dont l'empreinte *Eij* est mémorisée dans la base WDB 120 et un ensemble d'états antérieurs *Sij*', *j*' étant un entier naturel inférieur à *j*, dont les empreintes *Eij*' sont mémorisées dans la base PDB 130, pour mettre à jour l'empreinte temporalisée du jeu de document *Pi.*

### Mode de réalisation particulier du module de génération d'empreinte

Dans un mode de réalisation particulier, le module SignM 110 est agencé de manière à interagir avec à un outil de gestion de version, par exemple de type CVS ou équivalent.

Les outils de gestion de version sont capables d'organiser le stockage de jeux de documents et de leurs différents états. En particulier, les outils de gestion de version peuvent gérer de façon incrémentale et cohérente les différents états d'un jeu de document : l'utilisation d'un outil de gestion de version permet d'obtenir l'ordonnancement des états *Sij* évoqué plus haut.

Lorsque plusieurs contributeurs sont susceptibles de modifier simultanément un même jeu de document, un outil de gestion de version permet l'identification de l'état à partir duquel les modifications ont été faites par le contributeur. Certains outils de gestion version ne stockent que les modifications successives, et/ou sont capables de vérifier, le cas échéant, l'absence de conflit entre des modifications simultanées réalisées sur tout ou partie d'un même document. Un outil de gestion de version peut également imposer que la mise à jour se fasse obligatoirement par rapport à la dernière version connue, plutôt que par rapport à la version d'origine lorsqu'elle est connue. Dans la pratique, le fonctionnement des différents outils de gestion de version différent : ici, on utilise la cohérence entre les états *Sij* provenant de l'utilisation des outils de gestion de version pour améliorer le procédé de génération d'empreinte temporalisée.

L'outil de gestion de version fournit encore un identifiant du contributeur qui a fait la mise à jour, et/ou la liste des document modifiés depuis un état quelconque.

Par exemple, un outils de type CVS peut stocker le dernier état d'un document *Oijl* et les différences entre les différents états antérieurs des documents *Oiml* successifs, *m* étant un entier naturel inférieur à *j*. Ici, l'indice *l* est associé indépendamment de l'indice d'état *j* à un fichier caractérisé de façon unique par son nom et son chemin d'accès.

L'outil de gestion de version fournit également une date de mise à jour, par exemple sur le serveur centralisé. Cette date est stockée en tant que référence de temporalité de l'état du jeu de document.

Un état peut correspondre à une mise à jour de la version présente sur le serveur. Aussi, typiquement un contributeur est associé à un état.

On remarque ici que selon l'outil de version utilisé, ou selon l'utilisation qui en est faite, il peut être associé :
- soit un nouvel état dès qu'un document du jeu de documents est modifié,
- soit un nouvel état pour une modification de plusieurs documents au cours d'une même contribution.

Cela ne modifie que très légèrement le fonctionnement de l'outil 100, en particulier en augmentant ou diminuant le nombre d'états.

Dans ce mode de réalisation, le module SignM 110 peut comprendre une fonction de comparaison de version compS( ).

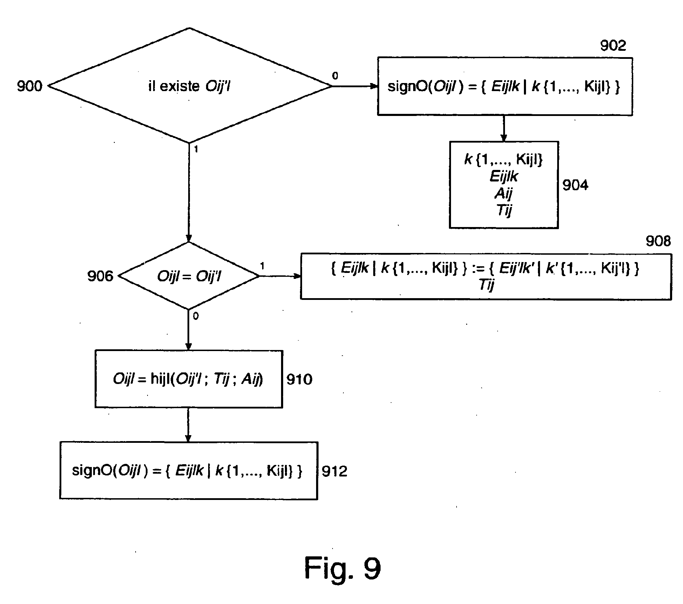

La fonction compS( ) est décrite à l'aide de la figure 9.

Pour simplifier la description, on fait ici l'hypothèse que deux états *Sij*' et *Sij* sont successifs.

Ici, l'outil est de type CVS. Dans ce cas, l'indice *1* caractérise le document indépendamment de l'état.

Pour chaque document *Oijl* du jeu de documents *Pi* dans un état *Sij,* la fonction compS( ) est agencée de manière à déterminer s'il existe un document *Oij'l* du jeu de documents *Pi* dans un état antérieur *Sij*'. (étape 900)

Sinon, la fonction compS( ) est agencée de manière à appeler la fonction signO( ) décrite plus haut de manière à générer l'ensemble des empreintes d'éléments *Eijlk* pour le document *Oijl.* (étape 902)

Chaque empreinte d'élément *Eijlk,* et en particulier la signature *Nijlk* qu'elle comprend, est stockée dans la base WDB 120 comme décrit plus haut. Une référence de temporalité *TPijl* du document *Oijl,* par exemple la date *Tij* de la mise-à-jour (ou contribution) obtenue à l'aide de l'outil de gestion de version, est également stockée dans la base WDB 120. De préférence, un attribut de document *AOijl*, par exemple un identifiant du contributeur *Aij* de l'état *Sij,* est également stocké dans la base WDB 120 (étape 904). Le cas échéant, l'attribut de document *AOijl* pourrait comprendre un identifiant de chaque contributeur *Aij* à l'état *Sij.*

Si le test de l'étape 900 est positif, alors la fonction compS( ) est agencée de manière à vérifier si le document *Oijl* est identique au document *Oij'l* (étape 906). Ceci peut être réalisé en comparant des états. Dans certains cas, l'outil de gestion de version est capable de réaliser cette vérification.

Si oui, alors la fonction compS( ) est agencée de manière à associer chaque signature des empreintes d'éléments *Eij' lk'* au document *Oijl.* Autrement dit, la fonction compS( ) établit en tant qu'empreinte *Eijl* du document *Oijl,* l'empreinte *Eij'l* du document *Oij'l,* à l'exception de la référence de temporalité *TPijl,* qui est celle du document *Oijl.* (étape 908)

Dans ce mode de réalisation, il n'est pas nécessaire que la fonction compS( ) soit agencée de manière à générer l'ensemble des empreintes d'éléments *Eijlk* du document *Oijl.* La fonction compS( ) peut utiliser les empreintes d'éléments *Eij'lk'* du document *Oij'l.* L'utilisation d'un outil de gestion de version interagissant avec le module SignM 110 permet d'économiser des ressources matérielles, en particulier de la charge d'unité de calcul.

Si le test de l'étape 906 est négatif, alors les documents *Oijl* et *Oij'l* sont différents. Le document *Oijl* peut alors être vu comme une transformation de l'objet *Oij'l* survenue à la date *Tij* et ayant pour contributeur *Aij* (étape 910). Sur la figure 9, cette transformation a été représentée sous la forme d'une fonction hijl( ).

La fonction compS( ) est agencée de manière à appeler la fonction signO( ) de manière à générer l'ensemble des empreintes d'éléments *Eijlk* du document *Oijl* comme décrit plus haut (étape 912). Les empreintes d'éléments *Eijlk* sont stockées dans la base WDB 120, le cas échéant en correspondance avec une référence de temporalité *TPijl* (par exemple la date *Tij*) et un attribut de document *AOijl* (par exemple une donnée d'identifiant de contributeur *Aij*).

### Structure de la base de données de jeux de documents

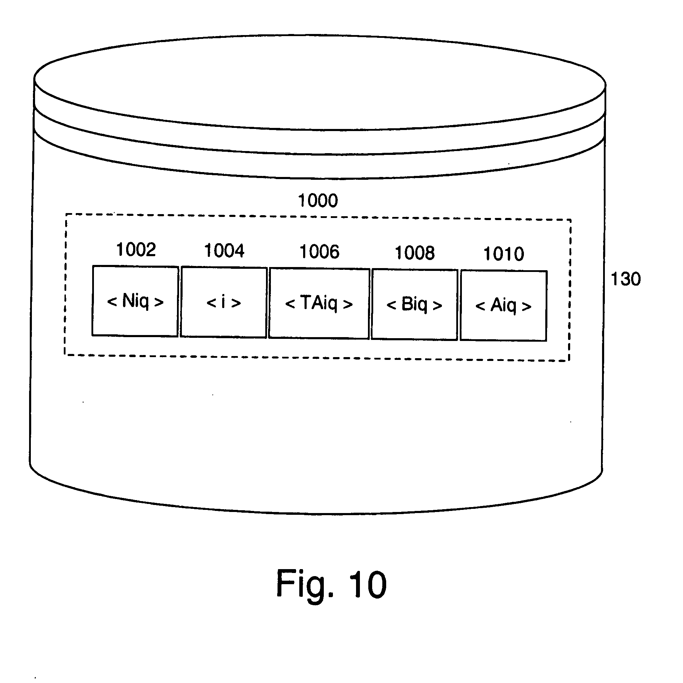

Un exemple de structure de la base PDB 130 est illustré sur la figure 10.

Pour chaque jeu de documents *Pi,* la base PDB 130 peut être agencée de manière à maintenir un tableau d'empreinte temporalisée de jeu de documents TpSignPTb[] 1000.

Chaque rangée de ce tableau TpSignPTb[] 1000 peut comprendre :
- une colonne de signature 1002 stockant une valeur de signature *Niq* particulière du jeu de document *Pi,* distincte de la valeur de signature d'une autre rangée,
- une colonne de référence au jeu de documents 1004, par exemple stockant la valeur de l'indice *i*, et
- une colonne de donnée de signature 1006 stockant la donnée de signature *Viq* associée à la valeur de la donnée de signature *Niq,* par exemple ici la date *TAiq* d'apparition de la valeur de signature *Niq* dans le jeu de documents *Pi.*

Le cas échéant, chaque rangée de ce tableau TpSignPTb[] 1000 peut comprendre en outre :
- une colonne de donnée d'attribut d'élément 1008 stockant la donnée d'élément *Ziq,* par exemple ici la valeur d'un indice de pertinence *Biq,*
- une colonne de donnée de document 1010 stockant une donnée de document *Wiq,* par exemple ici un identifiant de contributeur *Aiq.*

Chaque rangée du tableau TpSignPTb[] 1000 peut être considérée comme une empreinte d'élément temporalisée *Eiq.*

Le tableau TpSignPTb[] 1000 peut comporter en outre d'autres données, en particulier les données établies par le module SignM 110 et/ou temporairement stockées dans la base WDB 120.

Une mise en oeuvre particulière peut consister à stocker le tableau de la figure 6 en tant que tableau TpSignPTb[] 1000 pour un jeu de document particulier.

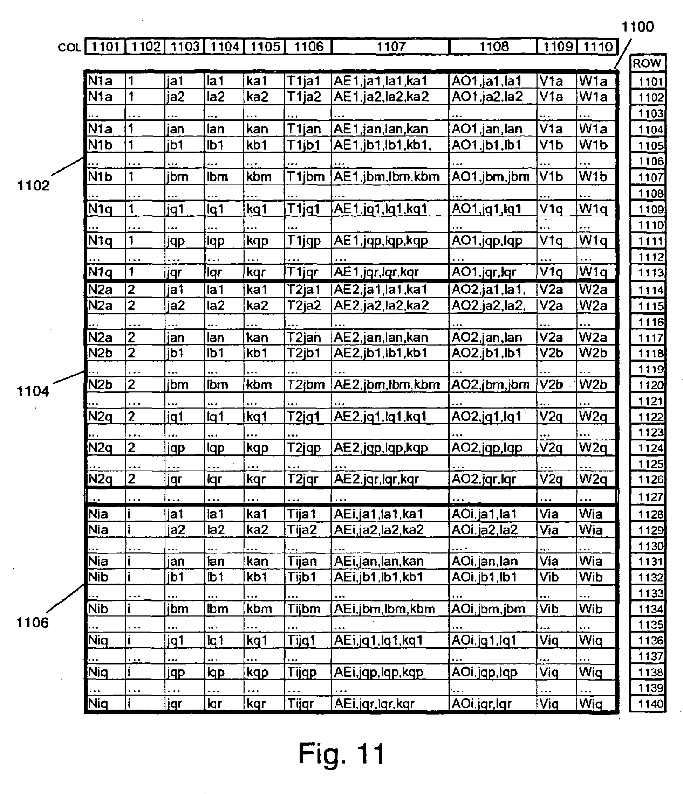

La base PDB 130 peut alors être agencée de manière à stocker un tel tableau pour chaque jeu de documents *Pi,* ou pour rassembler les tableaux relatifs aux différents jeux de documents *Pi* dans un même tableau. Sur la figure 11 par exemple, le tableau 1100 rassemble un tableau 1102 analogue au tableau 604 pour un jeu de documents *P1* constitué des colonnes COL1101 à COL1110 et des lignes ROW1101 à ROW1113, un tableau 1104 analogue au tableau 604 pour un jeu de documents *P2* constitué des colonnes COL1101 à COL1110 et des lignes ROW1114 à ROW1126, ainsi qu'un tableau 1106 analogue au tableau 604 pour un jeu de document quelconque Pi constitué des colonnes COL1101 à COL1110 et des lignes ROW1128 à ROW1140.

### Premier mode de réalisation du module de comparaison de jeux de documents

L'outil selon l'invention comprend un module de comparaison de jeux de documents ComM 140 agencé de manière à établir un ensemble de valeurs de signatures associées dans la base PDB 130 à la fois à un jeu de documents *Pi* et à un jeu de documents différent *Pi'.* Ceci peut permettre de déterminer que des éléments de documents *Oijl* du jeu de documents *Pi* se retrouvent dans un autre jeu de documents *Pi'.*

Le module ComM 140 est en outre agencé de manière à établir une dépendance entre un jeu de documents *Pi* et un jeu de documents *Pi',* en déterminant l'intégration dans le jeu de documents *Pi* d'éléments de documents du jeu de documents *Pi',* et inversement l'intégration dans le jeu de documents *Pi'* d'éléments de documents du jeu de documents *Pi.* Autrement dit, le module ComM 140 est agencé de manière à établir des dépendances entre des jeux de documents et à orienter ces dépendances.

On remarque que, pour des considérations pratiques, il faut que les fonctions filterA( ), filterB( ), et cut( ) soient agencées de telle manière que, pour des contenus identiques, la fonction signO( ) (ou une fonction équivalente) aboutisse à au moins un sous-ensemble de valeurs de signatures communes à ces contenus. On pourra souhaiter appliquer les fonctions filterA( ), filterB( ), et cut( ), agencées de manière identique, aux différents contenus à comparer de façon à obtenir, par l'intermédiaire de la fonction signO( ), des ensembles de valeurs de signatures identiques lorsque les contenus sont identiques.

Le module ComM 140 comprend une fonction de comparaison de jeux de documents comp( ). La fonction comp( ) est agencée de manière à comparer un premier jeu de documents *P1* à un second jeu de documents *P2* pour déterminer les éléments de documents communs aux jeux de documents *P1* et *P2.*

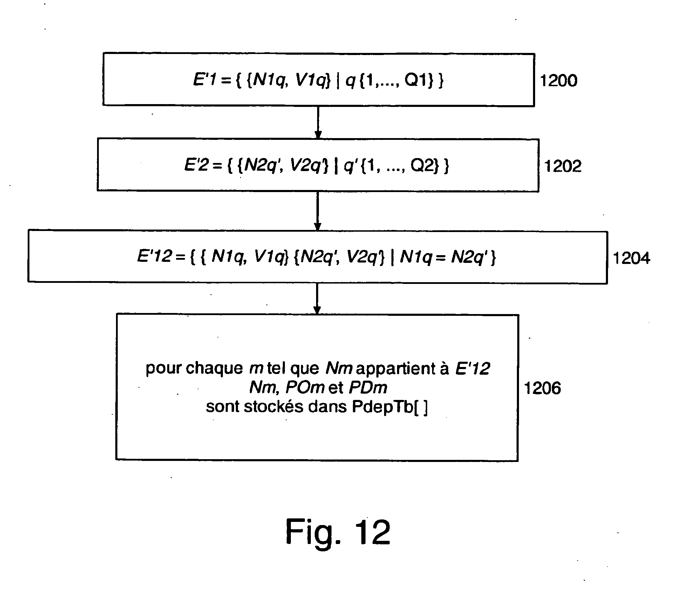

La fonction comp( ) est décrite à l'aide de la figure 12.

La fonction comp( ) est agencée de manière à extraire un sous-ensemble *E'1* de la base PDB 130 contenant les valeurs de signature *N1q* relatives au jeu de documents *P1* ainsi que les données de signatures *V1q* correspondantes (étape 1200). On suppose ici qu'il existe Q1 valeurs de signatures *N1q* différentes associées au jeu de documents *P1.*

En option, la fonction comp( ) est agencée de manière à extraire en outre l'ensemble des données associées aux valeurs de signatures *N1q* dans la base PDB 130. Par exemple, la fonction comp( ) peut être agencée de manière à extraire un tableau du genre du tableau 1102 de la figure 11.

De la même manière, la fonction comp( ) est agencée de manière à extraire un sous-ensemble *E'2* de la base PDB 130 relatif au jeu de documents *P2* (étape 1202), et constitué de Q2 valeurs de signatures *N2q*' différentes. Par exemple, la fonction comp( ) peut être agencée de manière à extraire un tableau du genre du tableau 1104 de la figure 11.

La fonction comp( ) est agencée de manière à construire un ensemble d'intersection *E'12* constitué de la réunion de sous-ensembles des ensembles *E'1* et *E'2* dont les valeurs de signatures *N1q* et *N2q'* sont égales (étape 1204). Autrement dit, la fonction comp( ) est agencée de manière à établir un tableau PintTb[ ] regroupant les valeurs de signatures *N1q* et *N2q*' de *E'1* et de *E'2* identiques ainsi que leurs données de signatures respectives *V1q* et *Y2q'.* Le cas échéant, la fonction comp( ) peut être agencée de manière à stocker en outre certaines, ou toutes, les données associées à ces valeurs de signatures dans la base PDB 130.

La fonction comp( ) est agencée de manière à établir un ensemble de dépendance *E"12.* Par exemple, la fonction comp( ) peut être agencée de manière à construire un tableau de dépendances PDepTb[] dont chaque rangée représente une dépendance orientée entre les jeux de documents *P1* et *P2* (étape 1206).

On entend par "dépendance" la présence d'une valeur de signature *N1q* associée au jeu de documents *P1* dans l'ensemble des valeurs de signature *N2q'* associées au jeu de documents *P2,* et inversement. Autrement dit, une dépendance entre les jeux de documents *P1* et *P2* révèle la présence dans l'un de ces jeux d'un élément de document de l'autre jeu.

La fonction comp() est agencée de manière à établir le tableau PdepTb[] de telle sorte que chaque ligne de ce tableau comprenne :
- une valeur de la signature *Nm,*
- une référence à un jeu de documents d'origine *POm* pour cette valeur de signature (c'est-à-dire à l'un des jeux *P1* ou *P2*),
- une référence à un jeu de documents de destination *PDm* pour cette valeur de signature (c'est-à-dire à l'autre des jeux *P1* ou *P2*);
le tableau PdepTb[] étant rempli de manière à recenser chaque valeur de signature *Nm* de l'ensemble *E'12,* les références aux jeux de documents d'origine *POm* et de destination *PDm* étant déterminés à l'aide d'une fonction d'orientation dir( ) à partir des données de signatures *Y1m* et *Y2m,* c'est-à-dire des valeurs des données de signatures *V1q* et *V2q'* correspondant à la valeur de signature *Nm* dans les ensembles *E'1* et *E'2*, respectivement. Par jeu de documents d'origine, on entend le jeu de documents depuis lequel l'élément de document *Cijlk* de valeur de signature *Nm* a le plus probablement été importé dans le jeu de documents de destination.

Chaque rangée du tableau PdepTb[] représente une de dépendance orientée indiquant une référence à un jeu de documents "d'origine" *POm* et une référence à un jeu de documents "de destination" *PDm,* pour une valeur de signature *Nm.*

En option, le tableau PdepTb[] peut en outre stocker pour chaque valeur de signature *Nm* :
- un attribut de dépendance *Fm,* qui peut être établi à partir des données de signature *V1m* et *V2m,* par exemple une date de première apparition de la valeur de signature *Nm* dans le jeu de documents d'origine *POm,*
- un attribut de dépendance de document *Gm,* qui peut être établi à partir des données d'attributs de documents *W1q* et *W2q,* par exemple une donnée caractérisant le type du document dont est issu l'élément générateur de la valeur de signature, ou un indice de fiabilité de la référence de temporalité
- un attribut de dépendance d'élément *Hm,* qui peut être établi à partir des données d'attributs d'élément *Z1q* et *Z2q,* par exemple une indication de la taille de l'élément générateur de la valeur de signature *Nm.*

Dans le cas où l'attribut de dépendance de document *Gm* comprend une donnée caractérisant le type du document, il est possible d'exclure les valeurs de signatures *Nm* dont les éléments générateurs sont issus de documents de type différent.

La détermination des jeux de documents d'origine *POm* et de destination *PDm* peut prendre en compte différents critères. La fonction dir( ) peut être agencée en conséquence.

En particulier, la fonction dir( ) peut être agencée de manière à déterminer en tant que jeu de document d'origine *POm* le jeu de documents dans lequel l'élément de document générateur de la valeur de signature *Nm* est apparu en premier. Dans ce cas, le jeu *POm* est le jeu de documents dans l'empreinte duquel la valeur de signature *Nm* est apparue le plus tôt, tandis que le jeu *PDm* peut être le jeu de documents dans lequel cette valeur de signature *Nm* n'est apparue qu'ultérieurement.

Dans un mode de réalisation particulier, les données de signature *V1m* et *V2m* comprennent chacune une date d'apparition *TA1m* et *TA2m* de la valeur de signature *Nm* dans les jeux de documents *P1* et *P2*, respectivement. La fonction dir( ) peut alors être agencée de manière à déterminer en tant que jeu d'origine *POm*, celui des jeux *P1* et *P2* correspondant à la plus ancienne des dates *TA1m* et *TA2m.* L'autre des jeux *P1* et *P2* étant déterminé en tant que jeu de destination *PDm.*

En option, la fonction comp( ) peut être agencée de manière à stocker les dates *TA1m* et *TA2m* en tant qu'attribut de dépendance *Fm.* L'attribut *Fm* correspond alors à un intervalle de temps au cours duquel s'est produite une intégration de contenu du jeu documents *POm* dans le jeu de documents *PDm.*

Dans un autre mode de réalisation, la donnée de signature *V1m* (respectivement *V2m*) comprend une date d'apparition *TA1m* (respectivement *TA2m*) dans le jeu de documents *P1* (respectivement *P2*) de la valeur de signature *N1m* (respectivement *N2m*) et une date de disparition *TD1m* (respectivement *TD2m*) de cette valeur de signature *Nm* de ce jeu. Dans ce cas, la fonction comp( ) peut être agencée de manière à établir les jeux d'origine *POm* et *PDm* comme précédemment et à maintenir en tant qu'attribut *Fm* la date de disparition *TD1m* ou *TD2m* dans le jeu de documents de destination *PDm.*

En option, et pour les modes de réalisation ci-dessus, les données de documents *W1m* et *W2m* comprennent un indice de fiabilité des données de signature *V1m* et *V2m,* en particulier lorsque ces données comprennent des dates d'apparition *TA1m* et *TA2m.* La fonction comp( ) peut alors être agencée de manière à remplir le tableau PdepTb[] uniquement avec les valeurs de signatures *Nm* dont la donnée de document *W1m* ou *W2m* est supérieure à une valeur seuil déterminée.

Plus généralement, la fonction dir( ) peut être agencée de manière à déterminer les jeux *POm* et *PDm* en tenant compte des données d'attribut d'élément *Z1m* et *Z2m,* des données d'attributs de documents *W1m* et *W2m,* des données d'attributs d'états *X1m* et *X2m,* et/ou des données de signatures *V1m* et *V2m.*

Par exemple, la fonction comp( ) peut être agencée de manière à établir en tant que jeu *POm* celui des jeux *P1* et *P2* correspondant à la plus ancienne des dates *TA1m* et *TA2m,* à la condition que l'indice de pertinence *B1m*, respectivement *B2m,* correspondant soit supérieur à une valeur déterminée.

En option, la fonction comp( ) peut être agencée de manière à supprimer du tableau de dépendance PdepTb[] les valeurs de signature *Nm,* et les données associées à celles-ci, dont l'un des indices de pertinence *B1m* et B*2m* est inférieur à une valeur prédéterminée ou encore dont les dates d'apparition *TA1m* ou *TA2m* et *TD1m* ou *TD2m* sont espacées d'un temps supérieur à une valeur fixée.

### Fonctions d'agrégation des dépendances

La fonction comp( ) peut être agencée de manière à appeler une fonction d'agrégation capable de rassembler les dépendances du tableau PdepTb[]. Ceci est particulièrement avantageux lorsque le nombre de dépendances dans ce tableau PdepTb[] est important.

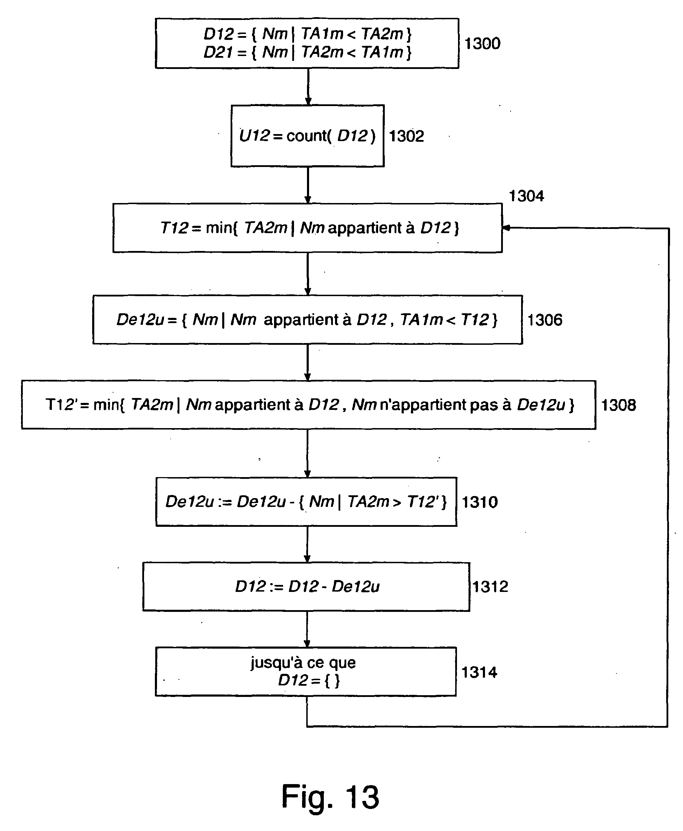

Un premier exemple de fonction d'agrégation agrDep1( ) est décrit à l'aide de la figure 13.

La fonction agrDep1( ) est agencée de manière à partager l'ensemble des dépendances *E"12* selon l'orientation des dépendances en deux sous-ensembles de dépendances *D12* et *D21* qui correspondent respectivement :
- à l'ensemble des dépendances de *E"12* telles que *POm* vaut *P1,* et
- à l'ensemble des dépendances de *E"12* telles que *POm* vaut *P2.* (étape 1300)

Par exemple, la fonction agrDep1( ) peut être agencée de manière à partager le tableau PdepTb[] en deux sous-tableaux Pdep12 Tb[] et Pdep21 Tb[] qui correspondent respectivement :
- aux lignes du tableau PdepTb[], c'est-à-dire aux valeurs de signature *Nm* et aux données associées à ces valeurs, telles que *POm* vaut *P1,* et
- aux lignes du tableau PdepTb[], c'est-à-dire aux valeurs de signature *Nm* et aux données associées à ces valeurs, telles que *POm* vaut *P2.*

L'ensemble *D12* comprend l'ensemble des valeurs de signature *Nm* dont la date d'apparition associée *TA1m* est plus ancienne que la date d'apparition associée *TA2m* (autrement dit inférieure à cette date). De même, l'ensemble *D21* comprend l'ensemble des valeurs de signature *Nm* dont la date d'apparition associée *TA2m* est plus ancienne que la date d'apparition associée *TA1m.*

On décrit tout d'abord l'agrégation du sous-ensemble *D12* par la fonction agrDep1( ).

En option, la fonction agrDep1( ) peut être agencée de manière à organiser les ensembles *D12* et *D21* de façon à rassembler les dépendances selon la ou les dates associées à leur valeur de signature *Nm.*

La fonction agrDep1( ) est agencée de manière à établir un nombre *U12* de valeurs de signatures *Nm* de l'ensemble *D12.* Ceci peut être fait à l'aide d'une fonction de recensement count( ) (étape 1302).

La fonction agrDep1( ) est agencée de manière à établir une date *T12* à laquelle un élément quelconque du jeu *P1* a pour la première fois été intégré au jeu *P2*. Autrement dit, la date *T12* est la date *TA2m* la plus ancienne associée aux valeurs de signatures *Nm* appartenant au sous-ensemble *D12.* (étape 1304)

La fonction agrDep1( ) est agencée de manière à établir un sous-ensemble de dépendances, ou agrégat, *De12u* de dépendances appartenant à l'ensemble *D12* dont la date d'apparition *TA1m* de la valeur de signature *Nm,* ou date à laquelle une signature identique à la signature *Nm* a pour la première fois été associée au jeu *P1,* est plus ancienne que la date *T12.* Autrement dit, l'ensemble *De12u* comprend les valeurs de signatures *Nm,* et des données associées à ces valeurs le cas échéant, appartenant à l'ensemble *D12* dont la date d'apparition *TA1m* est plus ancienne que la date *T12* (étape 1306)

La fonction agrDep1( ) est agencée de manière à établir une date *T12'* définie comme étant la plus ancienne des dates associées aux valeurs de signatures *Nm* des dépendances appartenant à l'ensemble *D12* mais n'appartenant pas à l'agrégat de dépendances *De12u.* Autrement dit, la date *T12'* représente la date la plus ancienne à laquelle un élément de document du jeu *P1* a été intégré au jeu *P2* mais dont la signature *Nm* n'appartient pas au regroupement en cours de construction. (étape 1308)

En option, la fonction agrDep1( ) peut être agencée de manière à supprimer de l'agrégat *De12u* les dépendances dont la date *TA2m* de première apparition de la valeur de signature *Nm* dans le jeu *P2* est plus récente que la date *T12*'. (étape 1310)

Les étapes 1304 à 1310 sont recommencées en excluant les dépendances des agrégats *De12u* déjà constitués jusqu'à ce que l'union des ensembles *De12u* obtenus soit identique à l'ensemble *D12.* Ceci peut être réalisé en excluant les dépendances de l'ensemble *De12u* qui vient d'être construit (étape 1312) et en recommençant les étapes 1304 à 1312 jusqu'à ce que l'ensemble *D12* soit vide (étape 1314)

La fonction agrDep1( ) est agencée de manière à réaliser symétriquement les étapes 1302 à 1314 pour le sous-ensemble *D21,* de façon à obtenir des agrégats de dépendances *De21u* dont l'union correspond au sous-ensemble de dépendances D21.

En option, la fonction agrDep1( ) peut être agencée de manière à établir pour chaque agrégat *De12u* (respectivement *De21u*) des données d'agrégats, en particulier à partir des attributs de dépendance *Fm,* de dépendance de document *Gm,* de dépendance d'élément *Hm* associés aux valeurs de signature *Nm* de cet agrégat. Le cas échéant, la fonction agrDep1( ) peut être agencée de manière à établir lesdites données d'agrégat à partir des données *V1m* ou *V2m, W1m* ou *W2m,* et/ou *Z1m* ou *Z2m.*

Par exemple, la fonction agrDep1( ) peut être agencée de manière à établir pour chaque agrégat *De12u* (respectivement *De21u*) une date de première intégration d'un élément quelconque de l'agrégat, c'est-à-dire la plus ancienne des dates *TA1m* associées aux valeurs de signatures *Nm* de l'agrégat en question. La fonction agrDep1( ) peut, en outre ou en remplacement, être agencée de manière à établir pour chaque agrégat :
- le nombre de valeurs de signatures *Nm* (donc de dépendances) contenues dans l'agrégat en question,
- une valeur moyenne des indices de fiabilité des références de temporalité, par exemple calculée à partir des attributs de dépendance de document *Gm,* et/ou
- une valeur indicative de la taille cumulée des éléments de documents dont les valeurs des signatures *Nm* sont comprises dans l'agrégat en question, par exemple calculée à partir des attributs de dépendance d'éléments *Hm* de ces signatures.

En option, la fonction agrDep1( ) peut être agencée de manière à établir une donnée caractéristique de la vraisemblance de l'agrégat. Par vraisemblance de l'agrégat, on entend principalement le fait que l'ensemble des éléments de documents dont les valeurs de signatures *Nm* sont comprises dans l'agrégat en question procèdent d'un même processus d'intégration de contenu. Par exemple, la fonction agrDep1( ) peut être agencée de manière à vérifier pour un agrégat *De12u* (respectivement *De21u*) s'il existe un intervalle de temps pendant lequel l'ensemble des valeurs de signatures de cet agrégat coexistait dans l'empreinte du jeu de documents d'origine.

On remarque ici que l'ajout de nouveaux états à l'un des jeux de documents *P1* et *P2* ne modifie pas les dépendances de l'ensemble *E"12* déjà recensées pourvu que ces états soient ultérieurs aux états à partir desquels l'ensemble *E"12* à été établi. En outre, l'ajout de nouveaux états ne modifie pas les agrégats obtenus grâce à la fonction agrDep1( ), mais peut seulement modifier le nombre de dépendances de ces agrégats. En pratique, quelque soit l'ajout ou la suppression d'éléments de documents dans les jeux *P1* et *P2*, ultérieurs à la comparaison, les dépendances établies restent valables. Par exemple, la suppression dans le jeu *P2* d'un élément de document du jeu *P1,* et qui a donc généré une dépendance, ne fait pas disparaître la dépendance. La comparaison entre jeux de documents, telle qu'autorisée par l'invention, peut être qualifiée de ce fait de "robuste". Cette propriété est principalement due au fait que l'empreinte temporalisée d'un jeu de document, telle qu'établie par le module SignM 110, n'est pas écrasée par l'ajout d'états ultérieurs : de nouvelles valeurs de signatures peuvent s'ajouter à l'empreinte mais les données de signature des valeurs de signature existantes ne sont pas modifiées, en particulier dans le cas où il s'agit d'une date de première apparition. Autrement dit, l'empreinte d'un jeu de document à une date considérée comprend l'empreinte de ce document établie à une date antérieure.

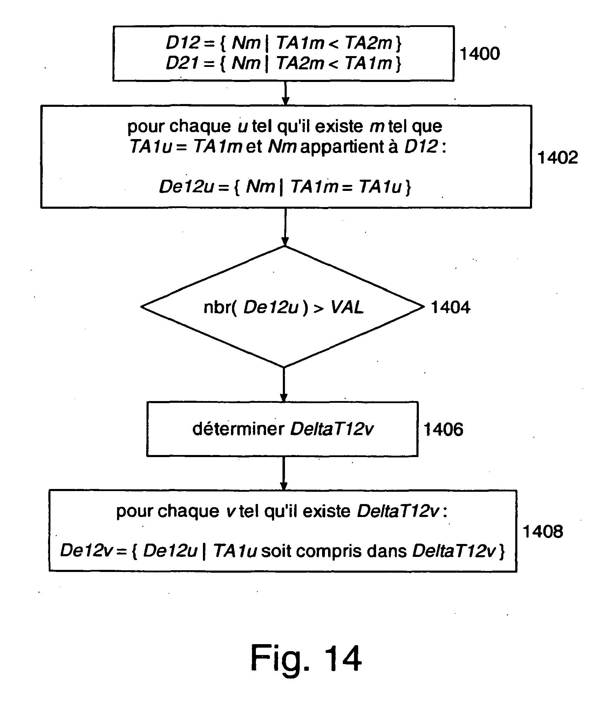

Un second exemple de fonction d'agrégation agrDep2( ) est décrit à l'aide de la figure 14.

La fonction agrDep2( ) est agencée de manière à partager l'ensemble des dépendances *E"12* selon l'orientation des dépendances en deux sous-ensembles de dépendances *D12* et *D21* conformément à l'étape 1300 de la figure 13. (étape 1400)

Pour chacune des valeurs de date *TA1u* de première apparition dans le jeu de documents *P1* telle qu'il existe une valeur de signature *Nu* comprise dans l'ensemble de dépendances *D12,* la fonction agrDep2( ) est agencée de manière à établir un sous-ensemble de dépendances, ou agrégat, *De12u* comprenant l'ensemble des valeurs de signatures *Nm,* et les données associées à ces valeurs de signature, dont la date *TA1m* est identique à la date *TA1u* (étape 1402). Autrement dit, la fonction agrDep2( ) est agencée de manière à partager l'ensemble *D12* en des agrégats *De12u* dont les signatures ont la même date d'apparition dans le jeu de documents *P1.*

En option, la fonction agrDep2( ) peut être agencée pour déterminer le nombre d'agrégats *De 12u* compris dans l'ensemble *D12,* par exemple à l'aide d'une fonction de dénombrement nbr( ), et à vérifier si ledit nombre est supérieur à une valeur prédéterminée *VAL* (étape 1404). La valeur *VAL* équivaut au nombre d'agrégats que l'on estime raisonnable de traiter. La valeur *VAL* peut être déterminée en considérant d'une part qu'un nombre élevé d'agrégats entraîne un traitement ultérieur lourd et d'autre part qu'un faible nombre d'agrégats entraîne une perte d'information pouvant rendre l'exploitation ultérieure sans objet. Par exploitation ultérieure, on entend en particulier le traitement réalisé par le module RightsM 150.

Si le test de l'étape 1404 est négatif, la fonction agrDep2( ) est arrêtée. Sinon, la fonction agrDep2( ) est agencée de manière à déterminer un ensemble d'intervalles temporels *DeltaT12v,* d'une façon décrite plus loin. (étape 1406)

Pour chacun des intervalles *DeltaT12v* déterminés à l'étape 1406, la fonction agrDep2( ) est agencée de manière à construire un sur-ensemble de dépendances, ou agrégat, *De12v* comprenant l'ensemble des agrégats *De12u* tels que la date *TA1u* soit comprise dans l'intervalle *DeltaT12v* en question (étape 1408). En d'autres termes, la fonction agrDep2( ) est agencée de manière à rassembler les dépendances de l'ensemble *D12* selon leur valeur de signature *Nm* en fonction de la date de première apparition de cette signature dans le jeu de documents *P1,* et plus précisément selon l'appartenance de ces dates à des intervalles temporels *DeltaT12v.* Dans certains cas, la construction des agrégats *De12v* pourra prendre en compte la date *TA2u* à la place de la date *TA1u.*

Les intervalles *DeltaT12v* sont déterminés de manière à rendre compte d'une cohérence dans le processus de production des éléments de documents. La détermination des ces intervalles *DeltaT12v* peut prendre en compte un ou plusieurs critères.

Par exemple, la fonction agrDep2( ) peut être agencée de manière à établir des intervalles *DeltaT12v* qui correspondent chacun à un état du jeu de document de destination *PDm,* ici le jeu de documents *P2*. Les dépendances de l'ensemble *D12* sont alors regroupées en fonction des états du jeu de documents de destination. Dans ce cas, la fonction agrDep2( ) est agencée de manière à définir les agrégats *De12v* en fonction des dates *TA2u.*

La fonction ou la date *TA2u* peut également être agencée de manière à déterminer les intervalles *DeltaT12v* de telle manière que chacun des intervalles corresponde à une suite d'états du jeu de documents dont les valeurs de l'attribut d'état, en particulier l'identifiant de contributeur *Aij,* sont identiques. Les dépendances de l'ensemble *D12* sont alors regroupées en fonction des états du jeu de documents d'origine et par contributeurs.

De manière générale, la définition des intervalles *DeltaT12v* pourrait résulter d'un choix de périodes temporelles caractéristiques de la fréquence de mise-à-jour des contenus de documents, par exemple tirées de données obtenues par l'outil de gestion de version, par exemple les dates, *Tij.*

On comprend que la fonction agrDep2( ) est agencée de manière à réaliser les étapes 1402 à 1408 de façon symétrique pour l'ensemble *D21.*

De manière analogue à la fonction agrDep1( ), la fonction agrDep2() peut être agencée de manière à vérifier la vraisemblance des agrégats *De12v* et *De21v* obtenus.

Toujours de manière analogue, la fonction agrDep2( ) peut être agencée de manière à établir pour chaque agrégat De12v des données d'agrégats, en particulier à partir des attributs de dépendance *Fm,* de dépendance de document *Gm,* de dépendance d'élément *Hm* associés aux valeurs de signatures *Nm* de cet agrégat, et le cas échéant à partir des données *V1m* ou *Y2m, W1m* ou *W2m,* et/ou *Z1m* ou *Z2m.*

Par exemple, la fonction agrDep2( ) peut être agencée de manière à établir pour chaque agrégat *De12v* (respectivement *De21v*) une date de première intégration d'un élément quelconque de l'agrégat, le nombre de valeurs de signatures *Nm* (donc de dépendances) contenues dans l'agrégat en question, une valeur moyenne des indices de fiabilité des références de temporalité, et/ou la taille cumulée des éléments de documents dont les valeur des signatures *Nm* sont comprises dans l'agrégat en question.

Les fonctions agr1Dep( ) et agr2Dep( ) décrites ici ne sont pas limitatives et d'autres fonction d'agrégation peuvent être définies, en complément ou en substitution. Par exemple, les valeurs de signatures *Nm,* et les données associées à ces valeurs, peuvent être regroupées selon leurs données *Fm, Gm* et ou *Hm,* et/ou le cas échéant selon des données *Y1m* ou *V2m, W1m* ou *W2m,* et/ou *Z1m* ou *Z2m.*

Dans tous les modes de réalisation des fonctions d'agrégation, ces fonctions peuvent en outre être agencées de manière à établir une donnée équivalant à un poids pour chaque agrégat obtenu. Ceci permet d'établir une hiérarchisation des agrégats en sorte que le traitement ultérieur par exemple peut être facilité. Par exemple, les fonctions d'agrégation peuvent être agencées de manière à prendre en compte pour la détermination dudit poids, le nombre de dépendances comprises dans l'agrégat, la taille cumulée des éléments de documents dont la signature représente une dépendance, un poids dans le jeu de documents d'origine et/ou de destination, la fiabilité de la ou des références temporelles associées aux signatures de l'agrégat, et plus toute information disponible.

### Second mode de réalisation du module de comparaison de jeux de documents

Dans ce mode de réalisation, le module ComM 140 est agencé de manière à comparer au sens décrit plus haut un jeu de document *Pi* à plusieurs jeux de documents *Pi*'.

Le module ComM 140 est agencé de manière à établir une dépendance entre un jeu de documents *Pi* et des jeux de documents *Pi*', en déterminant l'intégration dans le jeu de documents *Pi* d'éléments de documents des jeux de documents *Pi*', et inversement l'intégration dans les jeux de documents *Pi*' d'éléments de documents du jeu de documents *Pi.* Autrement dit, le module ComM 140 est agencé de manière à établir des dépendances entre un jeu de documents et un ensemble de jeux de documents, et à orienter ces dépendances.

Le module ComM 140 comprend une fonction de comparaison de jeux de documents comp1N( ). La fonction comp1N( ) est agencée de manière à comparer un premier jeu de documents *P1* à des jeux de documents *P2, P3..., Pn,... PN, N* étant un entier naturel, pour déterminer les éléments de document communs aux jeux de documents *P1* et *Pn,* pour toute valeur de *n.*

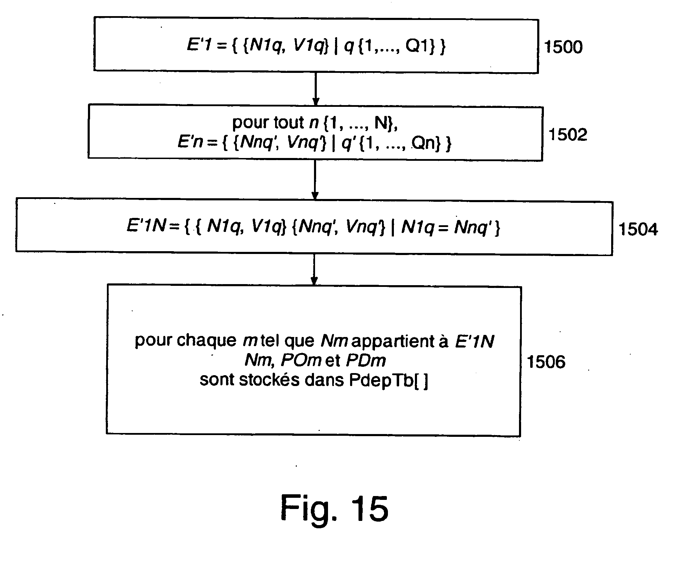

La fonction comp1N( ) est décrite à l'aide de la figure 15.

La fonction comp1N( ) est agencée de manière à extraire un sous-ensemble *E'1* de la base PDB 130 contenant les valeurs de signature *N1q* relatives au jeu de documents *P1* ainsi que les données de signatures *V1q* correspondantes (étape 1500). On suppose ici qu'il existe Q1 valeurs de signatures *N1q* différentes associées au jeu de documents *P1.*

En option, la fonction comp1N() est agencée de manière à extraire en outre l'ensemble des données associées aux valeurs de signatures *N1q* dans la base PDB 130. Par exemple, la fonction comp1N( ) peut être agencée de manière à extraire un tableau du genre du tableau 1102 de la figure 11.

La fonction comp1N( ) est agencée de manière à extraire des sous-ensemble *E'n* de la base PDB 130 relatif à chaque jeu de documents *Pn* (étape 1502), et constitués de Qn valeurs de signatures *Nq*' différentes. Par exemple, la fonction comp 1N( ) peut être agencée de manière à extraire des tableaux du genre du tableau 1104 de la figure 11, pour chaque jeu de documents *Pn*.

La fonction comp1N( ) est agencée de manière à construire un ensemble d'intersection *E'1N* constitué de la réunion des sous-ensembles d'intersection de l'ensemble *E'1* avec chacun des ensembles *E'n.* Par intersection entre deux ensembles, on entend l'ensemble des valeurs de signatures contenues à la fois dans ces deux ensembles, et, le cas échéant, les données associées à ces valeurs de signature dans l'un et l'autre des ensembles (étape 1504). Autrement dit, la fonction comp1N( ) est agencée de manière à établir un tableau PintTb[ ] regroupant les valeurs de signatures communes à *E'1* et à au moins l'un des ensembles *E'n.* Pour chaque valeur de signature commune, la fonction comp1N( ) est agencée de manière à stocker dans le tableau PintTb[ ] les données de signatures associées à cette valeur de signature dans l'ensemble *E'1* et dans chacun des ensembles *E'n* où elle se retrouve. Le cas échéant, la fonction comp1N( ) peut être agencée de manière à stocker en outre certaines ou toutes les données associées à ces valeurs de signatures dans la base PDB 130.

La fonction comp( ) est agencée de manière à établir un ensemble de dépendance *E"1N.* Par exemple, la fonction comp1N( ) peut être agencée de manière à construire un tableau de dépendances PDepTb[] dont chaque rangée représente une dépendance orientée entre le jeu de documents *P1* et un jeu de documents *Pn* (étape 1506).

La fonction comp1N() est agencée de manière à établir le tableau PdepTb[] de telle sorte que chaque ligne de ce tableau comprenne :
- une valeur de la signature *Nm,*
- une référence à un jeu de documents d'origine *POm* pour cette valeur de signature (c'est-à-dire au jeu *P1* ou l'un des jeux *Pn* en particulier),
- une référence à un jeu de documents de destination *PDm* pour cette valeur de signature (c'est-à-dire le jeu *Pn* particulier si *POm* vaut P1 ou le jeu *P1* si *POm* vaut le jeu *Pn* particulier);

Le tableau PdepTb[] étant rempli de manière à recenser chaque valeur de signature *Nm* de l'ensemble *E'1N.* Les références aux jeux de documents d'origine *POm* et de destination *PDm* sont déterminées à l'aide d'une fonction d'orientation dir( ) à partir des données de signatures *V1m* et *Vnm.*

Chaque rangée du tableau PdepTb[] représente une dépendance orientée indiquant une référence à un jeu de documents "d'origine" *POm* et une référence à un jeu de documents "de destination" *PDm,* pour une valeur de signature *Nm.*

En option, le tableau PdepTb[] peut en outre stocker pour chaque valeur de signature *Nm* :
- un attribut de dépendance *Fm*, qui peut être établi à partir des données de signatures *V1m* et *Vnm,* par exemple une date de première apparition de la valeur de signature *Nm* dans le jeu de documents d'origine *POm*,
- un attribut de dépendance de document *Gm,* qui peut être établi à partir des données d'attributs de documents *W1q* et *Wnq,* par exemple une donnée caractérisant le type du document dont est issu l'élément générateur de la valeur de signature, ou un indice de fiabilité de la référence de temporalité
- un attribut de dépendance d'élément *Hm,* qui peut être établi à partir des données d'attributs d'élément *Z1q* et *Znq,* par exemple une indication de la taille de l'élément générateur de la valeur de signature *Nm.*

La détermination des jeux de documents d'origine *POm* et de destination *PDm* peut prendre en compte différents critères. La fonction dir() peut être agencée en conséquence.

En particulier, la fonction dir() peut être agencée de manière à déterminer en tant que jeu de document d'origine *POm* le jeu de documents dans lequel l'élément de document générateur de la valeur de signature *Nm* est apparu en premier. Dans ce cas, le jeu *POm* est le jeu de documents dans l'empreinte duquel la valeur de signature *Nm* est apparue le plus tôt, tandis que le jeu *PDm* peut être le jeu de documents dans lequel cette valeur de signature *Nm* n'est apparue qu'ultérieurement.

Les différentes variantes de la fonction comp( ) décrite plus haut peuvent être transposées à la fonction comp1N( ) puisqu'il s'agit à chaque fois d'orienter une dépendance entre deux jeux de documents, à savoir le jeu *P1* et un jeu *Pn.*

La fonction comp1N( ) est donc agencée de manière à établir un ensemble *E"1N* de dépendances entre le jeu de documents *P1* et l'un quelconque de jeux de documents *Pn.* Autrement dit, chaque dépendance (ou valeur de signature *Nm*) de l'ensemble *E"1N* caractérise la présence d'un élément de document du jeu *P1* dans un jeu de documents *Pn,* avec un jeu de document d'origine *POm* et un jeu de document de destination *PDm.*

Ce mode de réalisation peut être vu comme l'application de la fonction comp( ) du premier mode de réalisation du module de comparaison entre le jeu de document *P1* et chacun des jeux de documents *P2*,..., *Pn,* ..., *PN.*

Dans ce mode de réalisation, la fonction comp1N( ) peut appeler une fonction d'agrégation pour rassembler les dépendances en agrégats, ou sous-ensembles de l'ensemble *E"1N.*

Dans un premier exemple, la fonction comp1N( ) est agencée de manière à appeler une fonction d'agrégation agrDep3( ). La fonction agrDep3( ) est agencée de manière à partager l'ensemble de dépendances *E"1N* en sous-ensembles *E"1n* de telle sorte que chacun des sous -ensembles *E"1n* rassemble les dépendances entre le jeu de documents *P1* et le jeu de document *Pn* en question. La fonction agrDep3( ) est en outre agencée de manière à appeler l'une des fonctions d'agrégation du premier mode de réalisation du module de comparaison, en particulier l'une des fonction agrDep1( ) et agrDep2( ), pour chacun des ensembles de dépendances *E"1n.*

Dans un second exemple, la fonction comp1N( ) est agencée de manière à appeler une fonction d'agrégation agrDep4( ). La fonction agrDep4( ) est agencée de manière à supprimer de l'ensemble de dépendances *E"1N,* pour une valeur de signature *Nm,* particulière, les dépendances entre le jeu *P1* et l'un des jeux *Pn,* pour lesquelles la date d'apparition de la valeur de signature *Nm* dans le jeu d'origine *POm* n'est pas la plus ancienne de toutes les dates d'apparition de cette valeur de signature *Nm* dans l'ensemble des jeux de documents *P1, P2,* ..., *Pn,* ..., *PN.*

En option, en particulier lorsque le nombre de dépendances est trop important, par exemple pour être convenablement traité ultérieurement, la fonction agrDep4( ) peut être agencée de manière à réaliser des agrégats en fonction du jeu de documents d'origine *POm.* La fonction agrDep4( ) peut encore être agencée de manière à réaliser des agrégats en fonction des états du jeu de documents d'origine. La fonction agrDep4( ) peut encore être agencée de manière à réaliser des agrégats en fonction des critères suivants :
- état du jeu de documents de destination,
- identifiant du contributeur, et/ou
- intervalles temporels,
de manière analogue à ce qui a été décrit plus haut dans le premier mode de réalisation du module de comparaison.

Comme précédemment, des données caractéristiques peuvent être attribuées aux agrégats.

### Troisième mode de réalisation du module de comparaison

Dans ce mode de réalisation, le module ComM 140 est agencé de manière à comparer plusieurs jeux de documents *Pi* entre eux. Le module ComM 140 comprend une fonction de comparaison compNN( ) agencée de manière à appeler successivement la fonction comp1N( ) pour chacun des jeux de documents *Pi* de manière à établir un ensemble de dépendances E"NN.

Dans un développement particulier, la fonction compNN( ) est agencée de manière à supprimer dans l'ensemble de dépendances *E"NN,* pour une valeur de signature *Nm* particulière, les dépendances entre deux des jeux *Pn* pour lesquelles la date d'apparition de la valeur de signature *Nm* dans le jeu d'origine *POm* n'est pas la plus ancienne de toutes les dates d'apparition de cette valeur de signature *Nm* dans l'ensemble des jeux de documents *P1,* ..., *Pn, ..., PN.*

Les dépendances peuvent ensuite être agrégées selon l'une ou l'autre des fonctions décrites plus haut, soit de manière combinée, soit en remplacement. En particulier, les dépendances peuvent être agrégées selon le jeu de documents de destination *PDm,* c'est-à-dire que les valeurs de signature *Nm,* et les données qui sont associées à ces données, dont le jeu de documents de destination *PDm* est identique, sont rassemblées.

Comme précédemment, des données caractéristiques peuvent être associées aux agrégats ainsi obtenus, tels que la taille cumulée des éléments de documents, par exemple obtenue par sommation des attributs d'éléments *AEijlk* lorsque ceux-ci comprenne une indication de la taille de l'élément, ou encore une moyenne, éventuellement pondérée des indices de pertinence *Bijlk* associés aux éléments de documents, dont les signatures sont présentes dans l'agrégat en question, la plus ancienne des dates de première apparition dans le jeu de destination , ou autre.

### Module de gestion des droits

Le module de gestion des droits RightsM 150 est agencé de manière à interagir avec le module ComM 140 et la base PDB 130.

Le module RightsM 150 comprend une fonction de listage list( ) agencée de manière à établir pour un jeu de documents *Pi* l'ensemble des dépendances, c'est-à-dire des valeurs de signatures *Nm* et des données qui sont associées à ces valeurs de signatures, dont le jeu de documents de destination *PDm* est le jeu de documents *Pi*. Le cas échéant, lorsque les ensembles de dépendances *E"12, E"1N* ou *E"NN* ont fait l'objet d'une agrégation (c'est-à-dire lorsque des sous-ensembles de ces ensembles de dépendances ont été réalisés),la fonction list( ) est agencée de manière à établir la liste de ces agrégats dont un attribut associé est le jeu de documents de destination PDm et dont cet attribut vaut *Pi*.

Dans un mode de réalisation particulier, la fonction list( ) est agencée de manière à établir pour chacune des valeurs de signatures *Nim* présentes dans l'ensemble de dépendances *E"NN:*
- l'ensemble des références aux jeux de documents d'origine *POm* (noté ci-après *Pi'),*
- l'ensemble des attributs d'éléments *AEi*',*jqp*,*lqp*,*kqp* associés à chacun des jeux de documents d'origine *Pi',*
- l'ensemble des attributs de document *AOi',jqp,lqp* associés à chacun des jeux de documents d'origine *Pi',* par exemple l'ensemble des identifiants de contributeurs *Ai',jqp,*
- l'ensemble des attributs d'états *ASi',iqp* associés à chacun des jeux de documents d'origine *Pi',* et/ou
- l'ensemble des références de temporalité des éléments de documents, par exemple l'ensemble des dates *Ti'*,*jqp.*

Dans un développement particulier, la fonction list( ) est agencée pour établir en outre :
- l'ensemble des attributs de dépendances *Fm,* de dépendance de document *Gm* et/ou de dépendance d'élément *Hm,* et/ou
- l'ensemble des attributs associés à chacun des agrégats de dépendances, par exemple un attribut de dépendance indicatif d'une licence.

Par exemple, l'attribut de dépendance *Fm* peut indiquer un type de licence auquel est soumis le jeu de documents d'origine *POm*.

Dans un développement particulier, les attributs d'éléments *AEi',jqp,lqp,kqp* comprennent une information identifiant un type de licence (par exemple, "licence GPL", ou licence "BSD"). La fonction list() est alors agencée de manière à établir un ensemble des licences des jeux de documents d'origine *Pi'.* Cela permet, par exemple, d'établir un lien entre une dépendance et une licence pour aider à déterminer si les modalités d'exploitation du jeu de documents *Pi* est compatible avec celles du ou des jeux *Pi'.*

Dans un autre mode de réalisation particulier, la fonction de list( ) est agencée de manière à établir également une liste des dépendances (ou agrégats de dépendances) dont le jeu de documents d'origine *POm* est *Pi*, et un attribut de chaque jeu de documents de destination *PDm* (ici *Pi'*) indicateur d'un type de licence.

Dans un autre mode de réalisation encore, la fonction list( ) peut être agencée de manière à appeler une fonction de vérification d'incompatibilité de licences licver( ), agencée de manière à comparer un type de licence du jeu de documents d'origine *POm* stocké en tant qu'attribut de jeu de documents et un type de licence du jeu de documents de destination *PDm,* également stocké en tant qu'attribut de jeu de documents, à une liste préétablie d'incompatibilités juridiques de licences. La fonction list( ) peut être agencée de manière à appeler la fonction liever( ) pour chaque dépendance de l'ensemble *E"NN.*

Dans certains cas, les valeurs de signatures *Nim* et *Ni'm,* ainsi que les données qui y sont associées, pourraient également être établies par la fonction list( ). Dans le cas de l'utilisation d'un outil de gestion de version, lequel est agencé de manière à conserver un historique des différentes modifications apportées à un jeu de documents, ici au jeu de document d'origine et au jeu de documents de destination, ceci peut permettre d'aider l'utilisateur à déterminer la titularité des droits relatifs aux différents jeux de documents.

Dans un mode de réalisation particulier, lafonction list( ) est agencée de manière à établir pour un jeu de documents *Pi*, les valeurs de signatures *Nm* retrouvées dans les dépendances dont le jeu de documents de destination *PDm* est ce jeu de documents *Pi*, et les valeurs de signatures absentes de tout ensemble de dépendances. Chaque valeur de signature est associée à au moins une donnée de signature *Viq* ou *Vi'q',*et à une donnée de document *Wiq* ou *Wi'q',* selon le cas. Par exemple, la donnée de signature *Viq* ou *Vi'q'* peut comprendre une date de première apparition (indépendamment du jeu de documents), et la donnée de document *Wiq* ou *Wi'q',* un identifiant du document où le contenu ayant généré cette valeur de signatures a été trouvé pour la première fois.

D'autre part, la fonction list( ) peut être agencée de manière à établir l'ensemble, ou un extrait, des attributs d'éléments *AEijlk,* de documents *AOijl,* ou encore d'états *ASij,* associés dans la base PDB 130, ou WDB 120, au jeu de documents *Pi*.

Dans un mode de réalisation particulier, par exemple, les attributs de document *AOi,jqp,lqp* comprennent chacun au moins un identifiant de contributeur ainsi qu'une indication d'un statut de ce contributeur (par exemple, "employé", "particulier", ou "chercheur"). Et la fonction list( ) est alors agencée de manière à établir une liste des identifiants et de leur statut.

### Développements

L'invention trouve son intérêt maximum dans le cas où chaque document est découpé en éléments, à chacun desquels est associé une signature. Toutefois, certains des documents peuvent ne pas être découpés en éléments, par exemple dans le cas où le découpage n'a pas de sens, ou pas d'intérêt pour le but recherché. En pareil cas, on peut associer une signature au document pris en entier.

Dans ce qui précède, l'algorithme de découpage peut être propre à chaque système de gestion informatique d'un jeu de documents. Il peut être intéressant que les algorithmes de découpage soient standardisés, en fonction de chaque nature de fichier et/ou but recherché. Ainsi, des comparaisons deviennent possibles directement, d'un système à un autre.

La description ci -dessus fait appel à des dates T. Dans certains cas, des identifiants de date suffiront. Par "identifiant de date" on entend ici tout paramètre susceptible de faire l'objet d'un tri conforme à l'ordre chronologique. Ainsi, un identifiant de date peut être simplement l'identifiant de version dans le jeu de documents.

Par ailleurs, il n'est pas toujours nécessaire de stocker toutes les signatures. On a vu que l'on peut minimiser l'importance de certaines signatures stockées dans une liste que l'on pourrait appeler "liste grise". Il est envisageable de faire une "liste noire" de signatures qui ne seront pas stockées, éventuellement sous condition.

### Applications

La description détaillée ci-dessus se place essentiellement dans le cadre de projets de développement de logiciel. Les moyens décrits fournissent des outils automatisables qui permettent notamment de définir le statut juridique des logiciels. On sait que c'est une tâche particulièrement difficile, dès lors que s'élève le nombre des contributeurs personnes physiques, et de leurs entités juridiques de rattachement, d'autant plus que ce rattachement peut avoir évolué en fonction du temps. La tâche est encore plus difficile lorsqu'il s'agit de logiciels à base de composants et/ou développés collaborativement.

Face à cette complexité de la tâche, il est courant de définir, de façon purement intellectuelle, des solutions approchées mais inexactes, comme, par exemple :
- une qualifications arbitraire d'oeuvre collective, simplement parce que l'on n'a pas su résoudre exactement les contributions de chacun(e) et les dévolutions de droits correspondantes,
- négliger sans justification des contributions jugées mineures, face à la personnalité d'un auteur influent.

L'invention permet au contraire d'utiliserdes techniques rigoureuses, exactes et fiables, avec le degré de granularité que l'on souhaite dans le découpage de chaque document en éléments. Cela constitue un élément de base clé, dans l'évaluation et la gestion du risque juridique dans le cadre de l'utilisation ou de l'exploitation de logiciel, et en particulier de logiciel diffusé sous licence "open source".

Mais l'invention est susceptible d'autres applications, au niveau de la chaîne de production des ouvres numériques, et/ou des outils de numérisation et de traçabilité qu'elle utilise ou auxquels elle fait appel. Dans ce domaine, on rencontre également des oeuvres collaboratives et/ou à base de composants réutilisables.

Plus généralement, l'invention est particulièrement intéressante dès lors qu'il est possible de décomposer les documents en éléments caractéristiques à un titre et sur des critères quelconques (droit d'auteur ou copyright pour une oeuvre), de sorte que la comparaison des éléments issus de la décomposition de deux états successifs soit caractéristique des modifications faites sur l'état le plus ancien pour produire une version en cours ou finale.

Pour le logiciel (code), le découpage utilise la syntaxe et la grammaire du langage. À l'opposé, pour une vidéo/animation, le découpage va dépendre du format de stockage ; un format comme SVG (pour "Scalable Vector Graphics") est particulièrement bien adapté à la définition d'un découpage à la fois efficace et signifiant en termes de contenu.

La recherche de similarité entre documents se fait sur la présence ou non des éléments issus de la décomposition.
1. Contrairement à l'état de l'art, la temporalité de l'empreinte permet en fonction de la fiabilité de la référence temporelle de déterminer lorsque deux logiciels présentent des similarités, lequel a été intégré en tout ou partie par l'autre, et dans quelle version de celui-ci. Par exemple, il est ainsi possible de déterminer :
   (1) le statut juridique d'une contribution externe dûment identifiée sans se restreindre à la question de la compatibilité de licence,
   (2) de quelle étape de la chaîne de production provient la partie du logiciel intégrée,
   (3) la " diffusion " d'un code open source c'est-à-dire sa " notoriété " en identifiant les projets qui l'utilisent..
2. Il permet de faire des recherches de codes exogènes sans devoir accéder directement aux codes sources.
3. Le procédé est robuste du point de vue de l'outil de production dans le sens où une mise à jour incrémentale de l'historique des contributions (l'ajout d'état postérieurement au dernier état connu) ne pourra qu'étendre la signature temporelle en ajoutant le cas échéant de nouvelles signatures et donc de nouvelles dépendances (atomiques et agrégats) possibles, mais sans supprimer les précédentes (à noter cependant que leur pertinence peut être affectée). Les dépendances peuvent être modifiée par la prise en compte de nouveaux jeux de documents dans la base de comparaison. Il s'agit d'une propriété clé du point de vue de la problématique de traçabilité (c'est-à-dire du point de vue des procédures de contrôle qualité)
4. L'application de filtres et d'algorithmes de décomposition de contenu par type de fichier (pour chaque langage notamment) permet de garantir la pérennité des données par exemple en étant insensible aux portages invisibles d'un système à un autre, et/ou d'un environnement de développement à un autre. Il est également possible de définir des filtres ou fonctions de découpage robustes aux stratégies de contournement (par exemple filtre insensible à un changement de nom de variable ou à une permutation de blocs qui ne change pas les fonctionnalités).
5. Le lien entre " outils de production du contenu ", génération d'empreinte temporalisée et recherche de dépendances, permet, pour définir le statut juridique d'un logiciel, de prendre en compte l'ensemble des éléments constitutifs de celui-ci (liste des auteurs et de leur statut), y compris les éléments des tiers dont les modalités d'exploitation.
6. Il permet aussi de définir des stratégies d'évitement lorsque des problèmes de compatibilité de licences apparaissent (par exemple lorsque des versions antérieures ou ultérieures sont sous des licences plus permissives), lorsqu'il s'agit de faire des mesures d'impacts sur l'intégration de code exogène contaminant, ou encore d'identifier les responsabilités (qui a intégré du code exogène, et quand ?).
7. Il permet aussi de caractériser les activités de tel ou tel contributeur en terme de "contenu ". Par exemple, le nombre d'empreintes atomiques générées permet de définir une nouvelle métrique, ou de pondérer une métrique sur l'activité au sens de l'outil de production (c'est-à-dire le nombre de mise à jours ou le nombre de fichiers modifiés). Le cas échéant, il est possible de prendre en compte également la pertinence des empreintes (par exemple pour proposer des parts de copropriété de façon plus pertinente et robuste que le simple nombre de lignes générées).

Ce qui précède concerne surtout le logiciel, mais peut s'appliquer à d'autres types d'oeuvres, et plus généralement à d'autres types de documents informatiques où l'on souhaite faire une analyse fine couplée à la temporalité.

De façon très générale, il est ici proposé un procédé de gestion informatique de documents, qui comprend en combinaison les étapes suivantes :
a/ considérer un premier *(j* = *1)* contenu de document *(Oijl),* ayant une première référence de temporalité *(TPijl),*
b/ décomposer (200) ce premier contenu de document en des éléments *(Cijlk),* selon une règle choisie,
c/ associer (202) à chaque élément de document *(Cijlk)* obtenu à l'étape b/ une signature de son contenu *(Nijlk),*
d/ stocker pour le premier contenu de document une empreinte *(Eijl),* qui comprend certaines au moins des signatures obtenues à l'étape b/, ainsi qu'un identifiant de ladite première référence de temporalité de ce premier contenu de document,
e/ répéter les étapes a/ à d/ à chaque fois *(j = j* + *1)* pour au moins un autre contenu de document, ayant sa référence de temporalité,
f/ considérer une première valeur de signature *(Nijlk)* comme valeur de travail *(Niq),*
g/ appliquer une fonction horodatrice (dat( )) aux identifiants de référence de temporalité *(TPijl)* des empreintes *(Eijl)* contenant cette valeur de travail, et associer à cette valeur de travail *(Niq),* la valeur résultat *(Viq)* de ladite fonction horodatrice, en tant que référence de temporalité unifiée,
h/ répéter les étapes f/ à h/ avec à chaque fois une autre valeur de signature *(Nijlk)* comme valeur de travail *(Niq),*
i/ stocker une correspondance entre chaque valeur de signature et sa référence de temporalité unifiée.

En principe, les contenus de documents *(Oijl)* sont identifiables (ou "classables") selon au moins deux catégories parmi : un document donné, un état de document, une version de document, et un jeu de documents susceptible de comprendre plusieurs versions de documents. En conséquence, dans la description détaillée ci-dessus, l'expression "contenu de document" peut viser indifféremment un document précis (*l*), un état de document (*j*), une version de document, ou un jeu de document (*i*), sauf là où le contexte en veut autrement.

Dans la description détaillée qui précède, les quatre catégories sont présentes. En principe, jusqu'au niveau du jeu de document, on conserve la même finalité : c'est l'évolution de ce qui est perçu comme une même chose. Par contre, deux jeux de documents différents visent deux choses différentes, au moins partiellement.

Dans un mode de réalisation intéressant, notamment pour la recherche de contributions potentiellement créatives :
- la fonction horodatrice (dat( )) est agencée de manière à établir en tant que donnée de signature *(Viq)* l'un au moins parmi l'identifiant de la référence de temporalité (*TPi,jqp,lqp*) la plus ancienne de la liste et l'identifiant de la référence de temporalité (*TPi,jqp,lqp*) la plus récente de la liste.

Il peut être intéressant de particulariser certains au moins des éléments de document, par exemple pour en moduler l'importance. À cet effet :
- l'étape c/ comprend le fait d'associer en outre à chaque élément de document *(Cijlk)* un attribut d'élément *(AEijlk)* relatif à cet élément de document,
- à l'étape d/, l'empreinte *(Eijl)* comprend en outre un identifiant de certains au moins des attributs d'élément *(AEijlk),*
- à l'étape g/, la fonction horodatrice (dat( )) est agencée de manière à prendre en compte les identifiants d'attributs d'éléments *(AEijlk),* pour l'élection de temporalité, en particulier si elles vérifient une condition.

Dans des mises en oeuvre particulières, combinables :
- à l'étape d/, l'empreinte *(Eijl)* comprend les signatures des éléments dont l'attribut d'élément *(AEijlk)* est supérieur à une valeur déterminée.
- à l'étape-c/, l'attribut d'élément dépend de données de type statistique relatives au contenu de l'élément de document.

Également, il peut être intéressant de particulariser certains au moins des documents eux-mêmes. À cet effet :
- à l'étape a/, le contenu de document *(Oijl)* a en outre un attribut de document *(AOijl),*
- à l'étape d/, l'empreinte *(Eijl)* comprend en outre un identifiant dudit attribut de document du premier contenu de document,
- l'étape g/ comprend en outre le fait d'appliquer une fonction d'authentification (Aut( )) aux identifiants d'attributs de document *(AOijl)* des empreintes *(Eijl)* contenant la valeur de travail, et d'associer à cette valeur de travail *(Niq),* la valeur-résultat *(Wiq)* de ladite fonction d'authentification, en tant que donnée d'attribut de document unifiée,
- l'étape i/ comprend en outre le fait de stocker une correspondance entre chaque valeur de signature et sa donnée d'attribut de document unifiée.

Dans une mise en oeuvre particulière de ce qui précède :
- à l'étape g/, la fonction d'authentification est en outre appliquée aux identifiants de références de temporalité des empreintes *(Eijl)* contenant la valeur de travail.

Selon d'autres mises en oeuvre particulières, combinables, et d'application plus générale :
- l'attribut de contenu de document *(AOijl)* comprend un identifiant d'un contributeur audit contenu de document *(Oijl).*
- il est prévu (par exemple à l'étape d/) de reconnaître au moins une structure de contenu de document *(Oijl)* connue et, en présence d'un document dont la structure a été reconnue, d'associer à ce document une donnée (702) caractéristique de cette structure, ce qui intervient sur l'établissement de l'empreinte *(Eijl)*.
- il est prévu (par exemple à l'étape a/) d'établir à partir d'un contenu de document (*Oijl*) un contenu de document épuré (*O'ijl*) selon un premier ensemble de règles prédéterminées, lesquelles dépendent de ladite donnée caractéristique de la structure du contenu du document (*Oijl*)*,* tandis que la suite des opérations b/ à d/ s'effectue à partir de ce contenu de document épuré *(O'ijl).*
- il est prévu (par exemple à l'étape b/) d'établir à partir d'un élément de document (*Cijlk*) un élément de document épuré (*C'ijlk)* selon un second ensemble de règles prédéterminées, en particulier dépendant de la donnée caractéristique de la structure du document (*Oijl*), tandis que la suite des opérations b/ à d/ s'effectue à partir des éléments de document épurés (*C'ijlk*) ainsi obtenus.

On peut obtenir ainsi plusieurs empreintes, correspondant à plusieurs contenus de document.

Pour les rapprocher, le procédé peut se compléter comme suit :
- pour une valeur de signature donnée *(Niq),* on détermine une liste des identifiants de référence de temporalité (*TPi,jqp,lqp*) des empreintes (*Ei,jqp,lqp*) qui contiennent cette valeur de signature *(Niq),* et
- on établit une référence de temporalité unifiée *(Viq)* pour cette valeur de signature *(Niq),* en cherchant l'identifiant de la référence de temporalité (*TPi,jqp,lqp*) la plus ancienne de la liste (ou en appliquant un autre critère temporel, comme la recherche de la référence de temporalité (*TPi,jqp,lqp*) la plus récente de la liste).

On peut alors, pour la signature donnée, compléter (ou remplacer) sa référence de temporalité initiale par la référence de temporalité unifiée (*Viq*)*.*

De son côté, chaque contenu de document est muni d'une liste d'identifiants de références de temporalité (*TPijl*), que l'on peut comparer à une liste globale comprenant l'ensemble des références de temporalité (*TPijl*) des contenus de documents (*Oijl*)*.* On en tire, pour un contenu de document, une ou plusieurs périodes temporelles. Un telle période temporelle comprend des références de temporalités successives par rapport à l'ensemble des références de temporalité (*TPijl*)*.* Elle représente la période pendant laquelle un élément de document ayant une signature donnée a été présent de façon continue dans un contenu de document.

Les références de temporalité peuvent être définies de différentes manières, voire par saisie.

Il est préféré d'utiliser un outil de gestion de versions de contenus de documents, et de recevoir en mémoire, depuis cet outil de gestion de versions, des références de temporalité (*TPijl*) pour des contenus de documents.

De même, les identifiants de contributeur peuvent être définis de différentes manières, voire par saisie. Il est préféré d'utiliser là aussi un outil de gestion de versions, et de recevoir en mémoire, depuis cet outil de gestion de versions, au moins un identifiant de contributeur pour chacun des contenus de documents (*Oijl*).

Bien entendu, l'outil de gestion de version va également indiquer des versions différentes, présentant des contenus différents, pour ce qui est globalement considéré comme un seul document, à différentes phases de son élaboration ou de sa vie. Il peut même indiquer des sous-versions ou "états". Partant d'une pluralité de contenus de documents (*Oijl*), l'outil de gestion de versions peut établir le sous-ensemble de contenus de documents (*Oijl*) qui sont différents les uns des autres. Dans ce cas, il suffit d'appliquer les opérations a/ à c/ une seule fois, sur la base dudit sous-ensemble de contenus de documents (*Oijl*). Toutes les signatures utiles sont alors calculées avant l'opération d/.

On a vu que le procédé prévoit de stocker la correspondance entre chaque valeur de signature et sa référence de temporalité. Il peut être intéressant de stocker en outre un lien, par exemple un identifiant, vers l'ensemble des contenus de documents (*Oijl*) dont sont issues la valeur de signature et la référence de temporalité. On dispose ainsi, pour une signature de temporalité donnée, de l'ensemble des contenus de documents qui contiennent cette signature.

Le rapprochement entre des contenus de documents va faire apparaître des parties communes. Elles ont en principe une même origine, que l'on peut rechercher par l'examen des dépendances. Pour cela :
- α on compare un premier ensemble d'empreintes (*E'1*) et un second ensemble d'empreintes (*E'2*), ayant respectivement un premier identifiant (1) et un second identifiant (2).
   Le premier ensemble d'empreintes (*E'1*) comprend des valeurs de signatures (*N1q*) et leurs références de temporalité unifiée (*V1q*) correspondant au premier identifiant (1). Et le second ensemble d'empreintes (*E'2*) comprenant des valeurs de signatures (*N2q'*) et leurs références de temporalité unifiée (*V2q'*) correspondant audit second identifiant (2).
- β l'ensemble des comparaisons réussies fournit un sous-ensemble de dépendances *(E "12).* Pour chaque valeur de signature (*N1q;N2q*'*)* qui est commune, ce sous-ensemble contient des références de temporalités unifiées (*V1q; V2q'*) correspondantes pour lesdits premier et second ensembles d'empreintes.
- γ on définit (ou prédéfinit) un sens ou orientation de chaque dépendance. Le plus courant est de placer l'origine ou "source" au temps le plus ancien, et la destination ou "cible" (*PDm*) aux temps ultérieurs. En général, cela implique un ensemble de règles prédéterminées, appliquées sur la base des références de temporalité unifiées (*V1q; V2q'*). Considérant le premier identifiant (1) et le second identifiant (2), dont les empreintes ont une valeur de signature commune (*N1q*), cette opération d'orientation permet de qualifier l'un des premier et second identifiants (1 ;2) en tant qu'identifiant d'origine ou "source" (*POm*) et l'autre identifiant (2;1) en tant qu'identifiant de destination ou "cible" (*PDm*).

Un contenu de document peut être décomposé en peu d'éléments ou beaucoup d'éléments, selon le contexte, et selon la granularité choisie pour cette décomposition. Avec une granularité fine, donc beaucoup d'éléments (de document), le sous-ensemble (*E"12*) de dépendances (orientées ou non) va lui aussi comporter beaucoup d'éléments. Il est alors intéressant d'y rechercher les éléments qui sont dans la même situation, ce que l'on peut appeler un "agrégat". On peut partager le sous-ensemble (E"12) selon l'orientation des dépendances puis créer respectivement des agrégats de dépendances (*De12u*; *De21u*), sur la base de l'application itérative de l'un au moins des critères de partition suivants:
- prendre la signature *(Nm)* commune la plus ancienne (1304) non encore groupée, et grouper avec elle les autres signatures *(Nm)* communes relevant de références de temporalité côté "source" qui sont antérieures à cette signature *(Nm)* commune la plus ancienne (1306),
- sortir, d'un groupe donné, une signature commune dont la référence de temporalité "cible" est postérieure à la signature la plus ancienne parmi les signatures communes non encore groupées (1310),
- l'itération s'effectuant jusqu'à vérification d'un critère de fin de boucle donné.

On peut encore faire une comparaison multi-documents, sur N ensembles d'empreintes (N contenus de documents). Dans ce cas :
- on fait toutes les comparaisons possibles 1 à 1 sur les N documents (ou sur certains d'entre eux). Il y a au total N(N-1) comparaisons possibles. Ceci fournit une pluralité de sous-ensembles de dépendances, dont la réunion est un ensemble de dépendances.
- on oriente les dépendances, comme précédemment décrit.
- pour chaque signature dans ces sous-ensembles de dépendance (ou bien dans l'ensemble de dépendances), on écarte les dépendances dont la référence de temporalité "cible", pour la signature considérée, est postérieure à la date la plus ancienne parmi les N ensembles d'empreintes, pour la signature considérée.

Cette comparaison peut se faire à un niveau supérieur, par exemple entre N jeux de documents, tels que définis plus haut.

Dans une application telle que la gestion des droits, le procédé peut comprendre l'étape suivante :
- établir une liste datée de contributeurs, vérifiés à partir des empreintes et des éventuelles dépendances.

L'invention couvre également les programmes exécutables, ou programmes produits, capables d'animer le dispositif informatique décrit, et/ou de mettre en oeuvre les procédés correspondants. Un tel programme exécutable peut être mis à disposition sous tout "medium" (support) lisible par ordinateur. L'expression "medium lisible par ordinateur" comprend les supports de stockage de données, magnétiques, optiques et/ou électroniques, aussi bien qu'un support ou véhicule de transmission, comme un signal analogique ou numérique.

L'invention n'est pas limitée aux modes de réalisation décrits ci-dessus, mais englobe toutes les variantes que pourra envisager l'homme de l'art.

## Revendications

1. Dispositif informatique de gestion de documents, comprenent une mémoire pour stocker des contenus de documents, ayant des référence de temporalité,
**caractérisé en ce qu'**il comprend :
- un extracteur (200) capable de décomposer un contenu de documents (Oijl) en des éléments (Ci/lk), selon une règle choisie,
- un générateur de signature (202), capable de traiter un élément de document (Cijlk) pour retourner une signature numérique caractéristique de son contenu (Nijlk), ledit dispositif étant **caractérisé en ce qu'**il comprend en outre :
- un générateur d'empreinte (signO( )), capable d'établir, pour un contenu de document (Oijl) une empreinte (Eijl), qui comprend la référence de temporalité (TPijl) de ce contenu de document, ainsi que certaines au moins des signatures (Ni/lk) obtenues en appelant l'extracteur (200) pour transformer ce contenu de document en éléments (Cijlk), puis le générateur de signatures (202) pour les éléments (Cijlk) ainsi obtenus,
- un module horodateur (dat( )) capable de calcular la valeur-résultat d'une fonction prédéterminée d'élection de temporalité dans une liste d'identifiants de références de temporalité (TPijl), ladite fonction prédéterminée d'élection de temporalité, calculée par le module horodateur, est agencée pour déterminer en tant que valeur-résultat l'un au moins parmi l'identifiant de la référence de temporalité la plus ancienne de la liste et l'identifiant de la référence de temporalité la plus récente de la liste.
- un superviseur (110) agencé pour:
* faire opérer le générateur d'empreinte (signO( )) sur au moins deux contenus de documents (Oijl), ce qui donne deux empreintes (Eijl), ayant ensemble une pluralité de signatures,
* pour chaque valeur de signature (Niq), appeler répétitivement le module horodateur (dat( )), avec à chaque fois une liste de certains au moins des identifiants de référence de temporalité (TPijgp,lgp) des empreintes (Ei,jgp,lgp) contenant une même valeur de signature (Niq), ce qui fournit une référence de temporalité unifiée (Viq) pour chaque valeur de signature (Niq),
* associer à un jeu de contenus de document comprenant au moins lesdits deux contenus de documents une empreinte numérique comprenant chaque valeur de signature de ladite pluralité de signatures et indiquant, pour ladite valeur de signature, la référence de temporalité unifiée fournie; une correspondance entre chaque signature et l'élement de document à partir duquel ladite signature a été génèrée, étant stockée.

2. Dispositif selon la revendication 1, **caractérisé en ce que** :
- il comprend en outre un qualificateur de contenu (eval( )) capable de traiter un élément de document pour retourner un attribut d'élément relatif à cet élément de document.

3. Dispositif selon la revendication 2, **caractérisé en ce que**:
- le générateur d'empreinte (signO( )) est capable d'établir, pour un contenu de document, une empreinte qui comprend en outre des identifiants de certains au moins des attributs d'éléments de ce contenu de document, en appelant le qualificateur de contenu (eval( )) pour les éléments obtenus de l'extracteur (200),
- ladite fonction prédéterminée d'élection de temporalité est agencée de manière à prendre en compte les identifiants d'attributs d'éléments, pour l'élection de temporalité,
- le superviseur (110) est agencé pour appeler répétitivement le module horodateur (dat( )), avec à chaque fois une liste des identifiants de référence de temporalité des empreintes contenant une même valeur de signature et les identifiants d'attributs d'éléments associés.

4. Dispositif selon l'une des revendications 2 et 3, **caractérisé en ce que** :
- le générateur d'empreinte est agencé de manière à établir, pour un contenu de document, une empreinte qui comprend la référence de temporalité de ce contenu de document, et les signatures des éléments de document dont l'attribut d'élément vérifie une condition déterminée.

5. Dispositif selon l'une des revendication 2 à 4, **caractérisé en ce que** le qualificateur de contenu (eval( )) est capable de traiter un élément de document pour retourner en tant qu'attribut d'élément la valeur-résultat d'une fonction prédéterminée de type statistique portant sur le contenu de cet élément de document.

6. Dispositif selon l'une des revendications précédentes, certains au moins des documents ayant en outre chacun au moins un attribut de contenu de document, **caractérisé en ce que** :
- le générateur d'empreinte (signO()) est capable d'établir, pour un contenu de document, une empreinte qui comprend en outre un identifiant de l'attribut de ce contenu de document.

7. Dispositif selon la revendication 6, **caractérisé en ce qu'**il comprend en outre :
- un module d'authentification (aut()) capable de calculer la valeur-résultat d'une fonction prédéterminée d'élection d'attribut de document, dans une liste d'identifiants d'attributs de contenus de documents, en fonction d'une liste d'identifiants de références de temporalité.

8. Dispositif selon la revendication 7, **caractérisé en ce que** :
- le superviseur (110) est agencé pour :
* appeler répétitivement le module d'authentification (aut( )), avec à chaque fois une liste des identifiants d'attributs de contenu de documents des empreintes qui contiennent une même valeur de signature, ce qui fournit une donnée d'attribut de contenu de document unifiée pour chaque valeur de signature, et
* stocker une correspondance entre chaque valeur de signature et sa donnée d'attribut de contenu de document unifiée.

9. Dispositif selon l'une des revendications 6 à 8, **caractérise en ce que** l'attribut de contenu de document comprend un identifiant d'un contributeur audit contenu de document.

10. Dispositif selon l'une des revendications précédentes, **caractérisé en ce qu'** il comprend en outre :
- un module qualificateur (type( )) capable de reconnaître au moins une structure de contenu de document connue et, en présence d'un document dont la structure a été reconnue, d'associer à ce document une donnée (702) caractéristique de cette structure,
et **en ce que** le générateur d'empreinte (signO( )) est agencé de manière à appeler le module qualificateur (type( )) pour l'établissement de l'empreinte.

11. Dispositif selon la revendication 10, **caractérisé en ce qu'**il comprend en outre :
- un premier module de filtrage (filterA( )) agencé de manière à établir à partir d'un contenu de document un contenu de document épuré selon un premier ensemble de règles prédéterminées, lesquelles dépendent de ladite donnée caractéristique de la structure du contenu du document,
et **en ce que** :
- le générateur d'empreinte (signO( )) est agencé de manière à appeler, pour un document, le premier module de filtrage (filterA( )) pour obtenir un contenu de document épuré, et à établir une empreinte en appelant l'extracteur (200) pour transformer ce contenu de document épuré en éléments, puis le générateur de signatures (202) pour les éléments ainsi obtenus.

12. Dispositif selon l'une des revendications 10 et 11, **caractérisé en ce qu'**il comprend en outre :
- un second module de filtrage (filterB( )) agencé de manière à établir à partir d'un élément de document un élément de document épuré selon un second ensemble de règles prédéterminées dépendant de la donnée caractéristique de la structure du document,
et **en ce que** :
- le générateur d'empreinte (signO( )) est agencé de manière à appeler, pour un document, le second module de filtrage (filterB( )) pour obtenir des éléments de document épurés à partir des éléments de document obtenus en appelant l'extracteur (200), puis le générateur de signatures (202) pour ces éléments de document épurés ainsi obtenus.

13. Dispositif selon l'une des revendications précédentes, **caractérisé en ce que** le superviseur (110) est agencé pour appeler répétitivement le module horodateur (dat( )), avec à chaque fois une liste de tous les identifiants de référence de temporalité des empreintes qui contiennent une même valeur de signature, pour fournir une référence de temporalité unifiée pour chaque valeur de signature.

14. Dispositif selon l'une des revendications 1 à 13, **caractérisé en ce que** le superviseur (110) est agencé pour appeler répétitivement le module horodateur (dat( )), pour chaque valeur de signature, avec à chaque fois un identifiant de référence de temporalité d'une empreinte contenant cette valeur de signature et un identifiant de la référence de temporalité unifiée de cette valeur de signature pour fournir une nouvelle référence de temporalité unifiée pour chaque valeur de signature.

15. Dispositif selon l'une des revendications précédentes, **caractérisé en ce que** le module horodateur (dat( )) est agencé de manière à comparer ladite liste d'identifiants de références de temporalité à l'ensemble des références de temporalité des contenus de documents, et à déduire de cette comparaison, en tant que valeur-résultat, des identifiants de périodes temporelles dans ladite liste, chaque période temporelle étant constituée de références de temporalités successives par rapport à l'ensemble des références de temporalité.

16. Dispositif selon l'une des revendications précédentes, **caractérisé en ce qu'** il est agencé de manière à interagir avec un outil de gestion de versions de contenus de documents, ladite mémoire recevant, depuis cet outil de gestion de versions, des références de temporalité pour des contenus de documents.

17. Dispositif selon la revendication 16, **caractérisé en ce que** l'outil de gestion de versions de contenus de documents est en outre capable d'associer un identifiant de contributeur à chacun des contenus de documents, ladite mémoire recevant également de tels identifiants de contributeur.

18. Dispositif selon l'une des revendications 16 et 17, **caractérisé en ce que** le superviseur (110) est agencé de manière à :
* interagir avec l'outil de gestion de versions de contenus de documents pour établir, à partir d'une pluralité de contenus de documents, un sous-ensemble de contenus de documents différents les uns des autres,
* faire opérer le générateur d'empreinte (signO( )) sur chacun des contenus de documents dudit sous-ensemble, pour obtenir des empreintes ayant ensemble une pluralité de signatures,
* appeler répétitivement, pour chacune des valeurs de signatures obtenues du sous-ensemble, le module horodateur (dat( )) avec une liste comprenant à la fois les identifiants de temporalité des empreintes obtenues du sous-ensemble et les identifiants de temporalité de chacun des contenus de documents identiques au contenu de document du sous-ensemble dont est issu la valeur de signature.

19. Dispositif selon l'une des revendications précédentes, **caractérisé en ce que** le superviseur (110) est en outre agencé pour :
* stocker, en plus de la correspondance entre chaque valeur de signature et sa référence de temporalité, un identifiant pour l'ensemble des contenus de documents dont sont issues la valeur de signature et la référence de temporalité.

20. Dispositif selon la revendication 19, **caractérisé en ce qu'**il comprend en outre :
- un comparateur d'empreintes (comp( )) capable de comparer un premier ensemble d'empreintes et un second ensemble d'empreintes, ayant respectivement un premier identifiant et un second identifiant, le premier ensemble d'empreintes comprenant des valeurs de signatures et leurs références de temporalité unifiée correspondant au premier identi fiant, et le second ensemble d'empreintes comprenant des valeurs de signatures et leurs références de temporalité unifiée correspondant audit second identifiant, l'ensemble des comparaisons réussies fournissant un sous-ensemble de dépendances, avec, pour chaque valeur de signature qui est commune, des références de temporalités unifiées correspondantes pour lesdits premier et second ensembles d'empreintes,
- un module d'orientation (dir( )) capable de qualifier, pour une valeur de signature commune, l'un des premier et second identifiants en tant qu'identifiant d'origine ou "source" et l'autre identifiant en tant qu'identifiant de destination ou "cible", selon un ensemble de règles prédéterminées, sur la base des références de temporalité unifiées,
- le comparateur d'empreintes (comp()) étant capable d'appeler le module d'orientation (dir( )) pour chaque valeur de signature dudit sous-ensemble de dépendances avec les références de temporalité unifiées correspondantes, afin de proposer une distinction entre la source et la cible.

21. Dispositifselon la revendication 20, **caractérisé en ce que** le module d'orientation (dir( )) est agencé de manière à établir en tant qu'identifiant d'ensemble de contenus de documents d'origine l'identifiant correspondant à la référence de temporalité unifiée la plus ancienne.

22. Dispositif selon la revendication 21, **caractérisé en ce qu'**il comprend en outre un module de partition (agrDep1( )) dudit sous-ensemble de dépendances entre lesdits premier et second ensembles d'empreintes, ce module de partition agrDep1( ) étant agencé pour partager ledit sous-ensemble selon l'identifiant d'origine des signatures puis pour respectivement créer des agrégats de dépendances, sur la base de l'application itérative de l'un au moins des critères de partition suivants:
- prendre la signature commune la plus ancienne (1304) non encore groupée, et grouper avec elle les autres signatures communes relevant de références de temporalité côté "source" qui sont antérieures à cette signature commune la plus ancienne (1306),
- sortir, d'un groupe donné, une signature commune dont la référence de temporalité "cible" est postérieure à la signature la plus ancienne parmi les signatures communes non encore groupées (1310),
- l'itération s'effectuant jusqu'à vérification d'un critère de fin de boucle donné.

23. Dispositif selon l'une des revendications 20 à 22, **caractérisé en ce qu'**il comprend en outre :
- un comparateur multi-documents, capable de recevoir N ensembles d'empreintes, puis d'effectuer les comparaisons orientées, d'un tel ensemble d'empreintes à un autre, pour certaines au moins des signatures, ce qui fournit, par comparaison de l'un au moins des ensembles d'empreintes aux autres, une pluralité de sous-ensembles de dépendance, et ensuite, pour chaque signature dans ces sous-ensembles de dépendance, d'écarter les dépendances dont la référence de temporalité "cible", pour la signature considérée, est postérieure à la date la plus ancienne parmi les N ensembles d'empreintes, pour la signature considérée.

24. Dispositif selon l'une des revendications 20 à 23, **caractérisé en ce qu'**il comprend un module de gestion globale de documents (150), capable d'établir une liste datée de contributeurs, vérifiés à partir des empreintes et des éventuelles dépendances.

25. Dispositif selon l'une des revendication précédentes, **caractérisé en ce que** les contenus de documents sont identifiables selon au moins deux catégories parmi : un document donné, un état de document, une version de document, et un jeu de documents susceptible de comprendre plusieurs versions de documents.

## Claims

1. Data-processing device for document management, comprising a storage unit for storing contents of documents, having time references, **characterised in that** it comprises:
- an extractor (200) which is capable of deconstructing a document content (Oijl) into elements (Ci/lk) in accordance with a selected rule,
- a signature generator (202) which is capable of processing a document element (Cijlk) in order to return a numerical signature characteristic of its content (Nijlk), the device being **characterised in that** it further comprises:
- a stamp generator (sign O()) which is capable of establishing, for a document content (Oijl), a stamp (Eijl) which comprises the time reference (TPijl) of that document content, and at least some of the signatures (Ni/lk) which are obtained by calling up the extractor (200) in order to convert that document content into elements (Cijlk), then the signature generator (202) for the elements (Cijlk) obtained in that manner,
- a clock module (dat()) which is capable of calculating the result value of a predetermined time selection function from a list of time reference identifiers (TPijl), the predetermined time selection function which is calculated by the clock module is provided to determine as the result value at least one from the identifier of the oldest time reference from the list and the identifier of the most recent time reference from the list,
a supervisor (110) provided for:
● operating the stamp generator (sign O()) on at least two document content items (Oijl) which provides two stamps (Eijl) together having a plurality of signatures,
● for each signature value (Niq), repeatedly calling up the clock module (dat()), with on each occasion a list of at least some of the time reference identifiers (TPijgp,lgp) of the stamps (Eijgp,lgp) containing the same signature value (Niq) which provides a unified time reference (Viq) for each signature value (Niq),
● associating with a set of document content items comprising at least the two document content items a digital stamp comprising each signature value of the plurality of signatures and indicating, for the signature value, the unified time reference provided, correspondence between each signature and the document element on the basis of which the signature has been generated being stored.

2. Device according to claim 1, **characterised in that**:
- it further comprises a content qualifier (eval()) which is capable of processing a document element in order to return an element attribute relating to that document element.

3. Device according to claim 2, **characterised in that**:
- the stamp generator (signO()) is capable of establishing, for a document content, a stamp which further comprises identifiers of at least some of the element attributes of that document content, by calling up the content qualifier (eval()) for the elements obtained from the extractor (200),
- the predetermined time selection function is provided so as to take into consideration the identifiers of element attributes for the time selection,
- the supervisor (110) is provided to repeatedly call up the clock module (dat()) with, on each occasion, a list of time reference identifiers of the stamps containing the same signature value and the associated element attribute identifiers.

4. Device according to either claim 2 or claim 3,
**characterised in that**:
- the stamp generator is provided in order to establish, for a document content, a stamp which comprises the time reference of that document content and the signatures of the document elements whose element attribute verifies a specific condition.

5. Device according to any one of claims 2 to 4,
**characterised in that** the content qualifier (eval()) is capable of processing a document element in order to return as the element attribute the result value of a predetermined function of the statistical type relating to the content of that document element.

6. Device according to any one of the preceding claims, at least some of the documents further each having at least one document content attribute, **characterised in that**:
- the stamp generator (signO0) is capable of establishing, for a document content, a stamp which further comprises an identifier of the attribute of that document content.

7. Device according to claim 6, **characterised in that** it further comprises:
- an authentication module (aut0) which is capable of calculating the result value of a predetermined function of document attribute selection from a list of identifiers of document content attributes in accordance with a list of time reference identifiers.

8. Device according to claim 7, **characterised in that**:
- the supervisor (110) is provided in order to:
● repeatedly call up the authentication module (aut()) with, on each occasion, a list of the identifiers of document content attributes of the stamps which contain the same signature value, which provides a unified piece of data of a document content attribute for each signature value and
● store a correspondence between each signature value and the unified piece of data of a document content attribute thereof.

9. Device according to any one of claims 6 to 8, **characterised in that** the document content attribute comprises an identifier of a contributor to the document content.

10. Device according to any one of the preceding claims,
**characterised in that** it further comprises:
- a qualifier module (type()) which is capable of recognising at least one known document content structure and, in the presence of a document whose structure has been recognised, is capable of associating with that document a piece of data (702) characteristic of that structure,
and **in that** the stamp generator (signO()) is provided in order to call up the qualifier module (type()) for establishing the stamp.

11. Device according to claim 10, **characterised in that** it further comprises:
- a first filtering module (filterA()) which is provided in order to establish, on the basis of a document content item, a document content which is cleaned in accordance with a first set of predetermined rules, which depend on the piece of data characteristic of the structure of the content of the document,
and **in that**:
- the stamp generator (signO()) is provided in order to call up, for a document, the first filtering module (filterA()) in order to obtain a cleaned document content and in order to establish a stamp by calling up the extractor (200) in order to convert that cleaned document content into elements, then the signature generator (202) for the elements obtained **in that** manner.

12. Device according to either claim 10 or claim 11,
**characterised in that** it further comprises:
- a second filtering module (filterB()) which is provided in order to establish, on the basis of a document element, a document element which is cleaned in accordance with a second set of predetermined rules in accordance with the piece of data characteristic of the structure of the document, and **in that**:
- the stamp generator (signO()) is provided in order to call up, for a document, the second filtering module (filterB()) in order to obtain cleaned document elements on the basis of the document elements obtained by calling up the extractor (200), then the signature generator (202) for those cleaned document elements obtained **in that** manner.

13. Device according to any one of the preceding claims, **characterised in that** the supervisor (110) is provided in order to repeatedly call up the clock module (dat()) with, on each occasion, a list of all the time reference identifiers of the stamps which contain the same signature value in order to provide a unified time reference for each signature value.

14. Device according to any one of claims 1 to 13, **characterised in that** the supervisor (110) is provided to repeatedly call up the clock module (dat()), for each signature value, with, on each occasion, a time reference identifier of a stamp containing that signature value and an identifier of the unified time reference of that signature value in order to provide a new unified time reference for each signature value.

15. Device according to any one of the preceding claims, **characterised in that** the clock module (dat()) is provided in order to compare the list of time reference identifiers with the entirety of the time references of the document contents and to deduce from that comparison, as a result value, identifiers of time periods in the list, each time period being constituted by successive time references in relation to the entirety of the time references.

16. Device according to any one of the preceding claims, **characterised in that** it is provided in order to interact with a tool for managing versions of document contents, the storage unit receiving, from that tool for managing versions, time references for document contents.

17. Device according to claim 16, **characterised in that** the tool for managing versions of document contents is further capable of associating a contributor identifier with each of the document content items, the storage unit also receiving such contributor identifiers.

18. Device according to either claim 16 or claim 17, **characterised in that** the supervisor (110) is provided in order to:
● interact with the tool for managing versions of document contents in order to establish, on the basis of a plurality of document contents, a subset of mutually different document contents,
● operate the stamp generator (signO()) on each of the document contents of the subset in order to obtain stamps together having a plurality of signatures,
● repeatedly call up, for each of the obtained signature values of the subset, the clock module (dat()) with a list comprising both the time identifiers of the obtained stamps of the subset and the time identifiers of each of the document contents identical to the document content of the subset from which the signature value originated.

19. Device according to any one of the preceding claims, **characterised in that** the supervisor (110) is further provided in order to:
● store, in addition to the correspondence between each signature value and its time reference, an identifier for the entirety of the document contents from which the signature value and the time reference originated.

20. Device according to claim 19, **characterised in that** it further comprises:
- a stamp comparator (comp()) which is capable of comparing a first set of stamps and a second set of stamps, having a first identifier and a second identifier, respectively, the first set of stamps comprising signature values and their unified time references corresponding to the first identifier, and the second set of stamps comprising signature values and their unified time references corresponding to the second identifier, the set of comparisons completed providing a subset of dependencies with, for each signature value which is common, corresponding unified time references for the first and second sets of stamps,
- an orientation module (dir()) which is capable of qualifying, for a common signature value, one of the first and second identifiers as an original or "source" identifier, and the other identifier as a destination or target identifier in accordance with a set of predetermined rules on the basis of the unified time references,
- the stamp comparator (comp0) being capable of calling up the orientation module (dir()) for each signature value of the subset of dependencies with the corresponding unified time references in order to provide a distinction between the source and the target.

21. Device according to claim 20, **characterised in that** the orientation module (dir()) is provided in order to establish as an identifier of a set of source document contents the identifier corresponding to the oldest unified time reference.

22. Device according to claim 21, **characterised in that** it further comprises a module for dividing (agrDep1()) the subset of dependencies between the first and second sets of stamps, that dividing module (agrDep1()) being provided in order to divide the subset in accordance with the source identifier of the signatures then in order to create groups of dependencies, respectively, on the basis of the iterative application of at least one of the following division criteria:
- taking the oldest common signature (1304) which is not yet grouped and grouping with it the other common signatures plotting time references at the "source" side which are prior to that common oldest signature (1306),
- taking, from a given group, a common signature whose "target" time reference is later than the oldest signature among the common signatures which have not yet been grouped (1310),
- the iteration being carried out until a given loop end criterion is verified.

23. Device according to any one of claims 20 to 22,
**characterised in that** it further comprises:
- a multi-document comparator which is capable of receiving N sets of stamps then carrying out the orientated comparisons, of one such set of stamps with another, for at least some of the signatures, which provides, by comparison of at least one of the sets of stamps with the others, a plurality of subsets of dependencies and, subsequently, for each signature in those subsets of dependencies, of removing the dependencies whose "target" time reference, for the signature considered, is later than the oldest date among the N sets of stamps for the signature considered.

24. Device according to any one of claims 20 to 23,
**characterised in that** it comprises a general document management module (150) which is capable of establishing a dated list of contributors which are verified on the basis of the stamps and any dependencies.

25. Device according to any one of the preceding claims,
**characterised in that** the document contents are identifiable in accordance with at least two categories from: a given document, a document state, a document version and a set of documents capable of comprising a plurality of document versions.

## Patentansprüche

1. Computervorrichtung zum Verwalten von Dokumenten, umfassend einen Speicher, um Dokumenteninhalte, mit Zeitreferenzen, zu speichern,
**dadurch gekennzeichnet, dass** sie Folgendes umfasst:
- einen Extrahierer (200), der dafür geeignet ist, gemäß einer gewählten Regel einen Dokumenteninhalt (Oijl) in Elemente (Cijlk) zu zerlegen,
- einen Signaturerzeuger (202), der dafür geeignet ist, ein Dokumentenelement (Cijlk) zu verarbeiten, um eine für seinen Inhalt charakteristische digitale Signatur (Nijlk) zurückzugeben,
wobei die Vorrichtung **dadurch gekennzeichnet ist, dass** sie ferner Folgendes umfasst:
- einen Fingerabdruck-Erzeuger (signO( )), der dafür geeignet ist, für einen Dokumenteninhalt (Oijl), einen Fingerabdruck (Eijl) zu erstellen, der die Zeitreferenz (TPijl) dieses Dokumenteninhalts sowie zumindest bestimmte der Signaturen (Nijlk) umfasst, die erhalten werden, indem der Extrahierer (200) aufgerufen wird, um diesen Dokumenteninhalt in Elemente (Cijlk) umzuwandeln, und dann der Signaturerzeuger (202) für die so erhaltenen Elemente (Cijlk) aufgerufen wird,
- ein Zeitstempel-Modul (dat( )), das dafür geeignet ist, den Ergebnis-Wert einer vorab bestimmten Funktion der zeitlichen Auswahl aus einer Liste mit Zeitreferenz-Identifikatoren (TPijl) zu berechnen,
- wobei die vorab bestimmte Funktion der zeitlichen Auswahl, die vom Zeitstempel-Modul berechnet wird, eingerichtet ist, um als Ergebnis-Wert zumindest einen von beiden, den ältesten Zeitreferenz-Identifikator der Liste oder den jüngsten Zeitreferenz-Identifikator der Liste, zu bestimmen,
- ein Organisationselement (110), das eingerichtet ist, um:
● den Fingerabdruck-Erzeuger (signO( )) an zumindest zwei Dokumenteninhalten (Oijl) funktionieren zu lassen, was zwei Fingerabdrücke (Eijl) ergibt, die eine Vielzahl von Signaturen gemeinsam haben,
● für jeden Signaturwert (Niq) wiederholt das Zeitstempel-Modul (dat( )) aufzurufen, mit jeweils einer Liste von zumindest bestimmten der Zeitreferenz-Identifikatoren (TPi, jgp, Igp) der Fingerabdrücke (Ei, jgp, Igp), die ein und denselben Signaturwert (Niq) enthalten, was eine vereinheitliche Zeitreferenz (Viq) für jeden Signaturwert (Niq) bereitstellt,
● einem Satz von Dokumenteninhalten, der zumindest die zwei Dokumenteninhalte umfasst, einen digitalen Fingerabdruck zuzuordnen, der jeden Signaturwert der Vielzahl von Signaturen umfasst und, für den Signaturwert, die bereitgestellte vereinheitlichte Zeitreferenz angibt; wobei eine Zuordnung zwischen jeder Signatur und dem Dokumentenelement, von dem ausgehend die Signatur erzeugt wurde, gespeichert wird.

2. Vorrichtung nach Anspruch 1, **dadurch gekennzeichnet, dass**:
- sie ferner einen Inhalts-Qualifikator (eval( )) umfasst, der dafür geeignet ist, ein Dokumentenelement zu verarbeiten, um ein Elementattribut für dieses Dokumentenelement zurückzugeben.

3. Vorrichtung nach Anspruch 2, **dadurch gekennzeichnet, dass**:
- der Fingerabdruck-Erzeuger ((signO( )) dafür geeignet ist, für einen Dokumenteninhalt, einen Fingerabdruck zu erstellen, der ferner Identifikatoren von zumindest bestimmten der Elementattribute dieses Dokumenteninhalts umfasst, indem der Inhalts-Qualifikator (eval( )) für die vom Extrahierer (200) erhaltenen Elemente aufgerufen wird,
- die vorab bestimmte Funktion der zeitlichen Auswahl derart eingerichtet ist, dass sie die Elementattributs-Identifikatoren für die Zeitauswahl berücksichtigt,
- das Organisationselement (110) eingerichtet ist, um wiederholt das Zeitstempel-Modul (dat( )) aufzurufen, mit jeweils einer Liste der Zeitreferenz-Identifikatoren der Fingerabdrücke, die ein und denselben Signaturwert und die zugeordneten Elementattributs-Identifikatoren enthalten.

4. Vorrichtung nach einem der Ansprüche 2 und 3, **dadurch gekennzeichnet, dass**:
- der Fingerabdruck-Erzeuger derart eingerichtet ist, dass er, für einen Dokumenteninhalt, einen Fingerabdruck erstellt, der die Zeitreferenz dieses Dokumenteninhalts und die Signaturen der Dokumentenelemente, von denen das Elementattribut eine bestimmte Bedingung verifiziert, umfasst.

5. Vorrichtung nach einem der Ansprüche 2 bis 4, **dadurch gekennzeichnet, dass** der Inhalts-Qualifikator (eval( )) dafür geeignet ist, ein Dokumentenelement zu verarbeiten, um als Elementattribut den Ergebnis-Wert einer vorab bestimmten Funktion vom statistischen Typ zurückzugeben, der sich auf den Inhalt dieses Dokumentenelements bezieht.

6. Vorrichtung nach einem der vorhergehenden Ansprüche, wobei zumindest bestimmte der Dokumente ferner jeweils zumindest ein Dokumenteninhalts-Attribut haben, **dadurch gekennzeichnet, dass**
- der Fingerabdruck-Erzeuger (signO( )) dafür geeignet ist, für einen Dokumenteninhalt, einen Fingerabdruck zu erstellen, der ferner einen Identifikator des Attributs dieses Dokumenteninhalts umfasst.

7. Vorrichtung nach Anspruch 6, **dadurch gekennzeichnet, dass** sie ferner Folgendes umfasst:
- ein Authentifizierungs-Modul (aut( )), das dafür geeignet ist, den Ergebnis-Wert einer vorab bestimmten Funktion der Auswahl von Dokumentenattributen aus einer Liste von Dokumenteninhaltsattributs-Identifikatoren, in Abhängigkeit von einer Zeitreferenzidentifikatoren-Liste, zu berechnen.

8. Vorrichtung nach Anspruch 7, **dadurch gekennzeichnet, dass**:
- das Organisationselement (110) eingerichtet ist, um :
● wiederholt das Authentifizierungs-Modul (aut( )) aufzurufen, mit jeweils einer Liste der Dokumenteninhaltsattributs-Identifikatoren der Fingerabdrücke, die ein und denselben Signaturwert enthalten, was einen vereinheitlichten Dokumenteninhaltsattributs-Wert für jeden Signaturwert bereitstellt, und
● eine Zuordnung zwischen jedem Signatunivert und dessen vereinheitlichtem Dokumenteninhaltsattributs-Wert zu speichern.

9. Vorrichtung nach einem der Ansprüche 6 bis 8, **dadurch gekennzeichnet, dass** das Dokumenteninhaltsattribut einen Identifikator eines Kontributors zu diesem Dokumenteninhalt umfasst.

10. Vorrichtung nach einem der vorhergehenden Ansprüche, **dadurch gekennzeichnet, dass** sie ferner Folgendes umfasst:
- ein Qualifizierungs-Modul (type( )), das dafür geeignet ist, zumindest eine bekannte Dokumenteninhalts-Struktur wiederzuerkennen und, bei Vorhandensein eines Dokuments, dessen Struktur wiedererkannt wurde, diesem Dokument einen für diese Struktur charakteristischen Wert (702) zuzuordnen,
und dass der Fingerabdruck-Erzeuger (signO( )) derart eingerichtet ist, dass er das Qualifizierungs-Modul (type( )) für die Erstellung des Fingerabdrucks aufruft.

11. Vorrichtung nach Anspruch 10, **dadurch gekennzeichnet, dass** sie ferner Folgendes umfasst:
- ein erstes Filter-Modul (filterA( )), das derart eingerichtet ist, dass es ausgehend von einem Dokumenteninhalt einen Dokumenteninhalt erstellt, der gemäß einer ersten Menge vorab bestimmter Regeln, die von dem für die Struktur des Inhalts des Dokuments charakteristischen Wert abhängen, bereinigt ist,
und dass
- der Fingerabdruck-Erzeuger (signO( )) derart eingerichtet ist, dass er, für ein Dokument, das erste Filter-Modul (filterA( )) aufruft, um einen bereinigten Dokumenteninhalt zu erhalten, und einen Fingerabdruck erstellt, indem er den Extrahierer (200) aufruft, um diesen bereinigten Dokumenteninhalt in Elemente umzuwandeln, und dann den Signatur-Erzeuger (202) für die so erhaltenen Elemente aufruft.

12. Vorrichtung nach einem der Ansprüche 10 und 11, **dadurch gekennzeichnet, dass** sie ferner Folgendes umfasst:
- ein zweites Filter-Modul (filterB( )), das derart eingerichtet ist, dass es ausgehend von einem Dokumentenelement ein Dokumentenelement erstellt, das gemäß einer zweiten Menge vorab bestimmter Regeln, die von dem für die Struktur des Dokuments charakteristischen Wert abhängen, bereinigt ist,
und dass
- der Fingerabdruck-Erzeuger (signO( )) derart eingerichtet ist, dass er, für ein Dokument, das zweite Filter-Modul (filterB( )) aufruft, um ausgehend von den erhaltenen Dokumentenelementen bereinigte Dokumentenelemente zu erhalten, indem er den Extrahierer (200) und dann den Signatur-Erzeuger (202) für diese so erhaltenen bereinigten Dokumentenelemente aufruft.

13. Vorrichtung nach einem der vorhergehenden Ansprüche, **dadurch gekennzeichnet, dass** das Organisationselement (110) eingerichtet ist, um wiederholt das Zeitstempel-Modul (dat( )) aufzurufen, mit jeweils einer Liste aller Zeitreferenz-Identifikatoren der Fingerabdrücke, die ein und denselben Signaturwert enthalten, um eine vereinheitlichte Zeitreferenz für jeden Signaturwert bereitzustellen.

14. Vorrichtung nach einem der Ansprüche 1 bis 13, **dadurch gekennzeichnet, dass** das Organisationselement (110) eingerichtet ist, um wiederholt das Zeitstempel-Modul (dat( )) aufzurufen, für jeden Signaturwert, mit jeweils einem Zeitreferenz-Identifikator eines Fingerabdrucks, der diesen Signaturwert enthält, und einem vereinheitlichten Zeitreferenz-Identifikator dieses Signaturwerts, um eine vereinheitlichte neue Zeitreferenz für jeden Signaturwert bereitzustellen.

15. Vorrichtung nach einem der vorhergehenden Ansprüche, **dadurch gekennzeichnet, dass** das Zeitstempel-Modul (dat( )) derart eingerichtet ist, dass es die Liste von Zeitreferenz-Identifikatoren mit der Menge der Zeitreferenzen der Dokumenteninhalte vergleicht und aus diesem Vergleich, als Ergebnis-Wert, Zeitperioden-Identifikatoren in dieser Liste ableitet, wobei jede Zeitperiode von Zeitreferenzen gebildet ist, die im Vergleich zu der Menge der Zeitreferenzen nachfolgen.

16. Vorrichtung nach einem der vorhergehenden Ansprüche, **dadurch gekennzeichnet, dass** sie derart eingerichtet ist, dass sie mit einem Werkzeug zur Verwaltung von Dokumenteninhaltsversionen interagiert, wobei der Speicher, von diesem Versionsverwaltungs-Werkzeug, Zeitreferenzen für Dokumenteninhalte empfängt.

17. Vorrichtung nach Anspruch 16, **dadurch gekennzeichnet, dass** das Werkzeug zur Verwaltung von Dokumenteninhaltsversionen ferner dafür geeignet ist, jedem der Dokumenteninhalte einen Contributor-Identifikator zuzuordnen, wobei der Speicher auch derartige Contributor-Identifikatoren empfängt.

18. Vorrichtung nach einem der Ansprüche 16 und 17, **dadurch gekennzeichnet, dass** das Organisationselement (110) derart eingerichtet ist, dass:
- es mit dem Werkzeug zur Verwaltung von Dokumenteninhaltsversionen interagiert, um, ausgehend von einer Vielzahl von Dokumenteninhalten, eine Untermenge von Dokumenteninhalten zu erstellen, die sich voneinander unterscheiden,
- es den Fingerabdruck-Erzeuger (signO( )) an jedem der Dokumenteninhalte der Untermenge funktionieren lässt, um Fingerabdrücke zu erhalten, die eine Vielzahl von Signaturen gemeinsam haben,
- wiederholt, für jeden der erhaltenen Signaturwerte der Untermenge, das Zeitstempel-Modul (dat( )) aufruft, mit einer Liste, die gleichzeitig die Zeit-Identifikatoren der erhaltenen Fingerabdrücke der Untermenge und die Zeit-Identifikatoren jedes der Dokumenteninhalte umfasst, die mit dem Dokumenteninhalt der Untermenge, aus dem der Signaturwert hervorgegangen ist, identisch sind.

19. Vorrichtung nach einem der vorhergehenden Ansprüche, **dadurch gekennzeichnet, dass** das Organisationselement (110) ferner eingerichtet ist, um:
- außer der Zuordnung zwischen jedem Signaturwert und seiner Zeitreferenz einen Identifikator für die Menge der Dokumenteninhalte zu speichern, aus denen der Signaturwert und die Zeitreferenz hervorgegangen sind.

20. Vorrichtung nach Anspruch 19, **dadurch gekennzeichnet, dass** sie ferner Folgendes umfasst:
- ein Fingerabdruck-Vergleichselement (comp( )), das dafür geeignet ist, eine erste Menge von Fingerabdrücken und eine zweite Menge von Fingerabdrücken zu vergleichen, mit jeweils einem ersten Identifikator und einem zweiten Identifikator, wobei die erste Menge von Fingerabdrücken Signaturwerte und deren vereinheitlichte Zeitreferenzen, die dem ersten Identifikator zugeordnet sind, umfasst und die zweite Menge von Fingerabdrücken Signaturwerte und deren vereinheitlichte Zeitreferenzen, die dem zweiten Identifikator zugeordnet sind, umfasst, wobei die Menge der erfolgreichen Vergleiche eine Untermenge von Abhängigkeiten bereitstellt, mit, für jeden Signaturwert, der gemeinsam ist, entsprechenden vereinheitlichten Zeitreferenzen für die erste und die zweite Menge von Fingerabdrücken,
- ein Orientierungs-Modul (dir( )), das dafür geeignet ist, für einen gemeinsamen Signaturwert gemäß einer Menge vorab bestimmter Regeln auf der Grundlage der vereinheitlichten Zeitreferenzen einen von beiden, den ersten oder den zweiten Identifikator, als Ursprungs-Identifikator oder "Quelle" und den anderen Identifikator als Bestimmungs-Identifikator oder "Ziel" zu qualifizieren,
- wobei das Fingerabdruck-Vergleichselement (comp( )) dafür geeignet ist, das Orientierungs-Modul (dir( )) für jeden Signaturwert der Abhängigkeits-Untermenge mit den entsprechenden vereinheitlichten Zeitreferenzen aufzurufen, um eine Unterscheidung zwischen der Quelle und dem Ziel vorzuschlagen.

21. Vorrichtung nach Anspruch 20, **dadurch gekennzeichnet, dass** das Orientierungs-Modul (dir( )) derart eingerichtet ist, dass es als Ursprungs-Identifikator der Menge von Dokumenteninhalten den Identifikator erstellt, welcher der ältesten vereinheitlichten Zeitreferenz entspricht.

22. Vorrichtung nach Anspruch 21, **dadurch gekennzeichnet, dass** sie ferner ein Teilungs-Modul (agrDep1 ( )) der Untermenge von Abhängigkeiten zwischen der ersten und der zweiten Menge von Fingerabdrücken umfasst, wobei dieses Teilungs-Modul (agrDep1()) eingerichtet ist, um die Untermenge gemäß dem Ursprungs-Identifikator der Signaturen zu teilen und dann, auf der Grundlage der wiederholten Anwendung zumindest eines der folgenden Teilungs-Kriterien, jeweils Abhängigkeitsgruppen zu bilden:
- die älteste, noch nicht gruppierte gemeinsame Signatur (1304) nehmen und sie mit den anderen gemeinsamen Signaturen gruppieren, die sich aus Zeitreferenzen auf der "Quellen"-Seite ergeben, die zeitlich vor dieser ältesten gemeinsamen Signatur (1306) liegen,
- aus einer gegebenen Gruppe eine gemeinsame Signatur herausnehmen, deren "Ziel"-Zeitreferenz zeitlich nach der ältesten Signatur unter den noch nicht gruppierten gemeinsamen Signaturen (1310) liegt,
- wobei die Wiederholung bis zur Bestätigung eines gegebenen Schleifenendekriteriums erfolgt.

23. Vorrichtung nach einem der Ansprüche 20 bis 22, **dadurch gekennzeichnet, dass** sie ferner Folgendes umfasst:
- ein Multi-Dokumenten-Vergleichselement, das dafür geeignet ist, N Mengen von Fingerabdrücken zu empfangen, dann die orientierten Vergleiche, einer derartigen Menge von Fingerabdrücken mit einer anderen, für zumindest bestimmte der Signaturen durchzuführen, was, durch Vergleich zumindest einer der Mengen von Fingerabdrücken mit den anderen, eine Vielzahl von Abhängigkeits-Untermengen bereitstellt, und dann, für jede Signatur in diesen Abhängigkeits-Untermengen, die Abhängigkeiten zu entfernen, deren "Ziel"-Zeitreferenz, für die betrachtete Signatur, zeitlich nach dem ältesten Datum unter den N Mengen von Fingerabdrücken, für die betrachtete Signatur, liegt.

24. Vorrichtung nach einem der Ansprüche 20 bis 23, **dadurch gekennzeichnet, dass** sie ein Modul zur Gesamtverwaltung von Dokumenten (150) umfasst, das dafür geeignet ist, eine mit Datum versehene Liste von Kontributoren zu erstellen, die ausgehend von den Fingerabdrücken und den eventuellen Abhängigkeiten verifiziert werden.

25. Vorrichtung nach einem der vorhergehenden Ansprüche, **dadurch gekennzeichnet, dass** die Dokumenteninhalte entsprechend zumindest zwei der folgenden Kategorien identifizierbar sind: ein gegebenes Dokument, ein Dokumentenzustand, eine Dokumentenversion und ein Dokumentensatz, der mehrere Dokumentenversionen enthalten kann.
